# EUROPEAN PATENT APPLICATION

(11) **EP 4 770 181 A1**
(43) Date of publication of application: **01.07.2026**
(21) Application number: 23953771.5
(22) Date of filing: 28.09.2023
(51) Int. Cl.: H04W 24/10

(54) **DELAY INFORMATION PROCESSING METHOD AND APPARATUS, INFORMATION TRIGGERING METHOD AND APPARATUS, DEVICE AND MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Grassi, Stefano
(86) International application number: PCT/CN2023/122916
(87) International publication number: WO 2025/065627

(57) **Abstract**

The present application relates to a delay information processing method and apparatus, an information triggering method and apparatus, a device and a medium. The delay information processing method comprises: under a first condition, triggering a DSR, and/or reporting the DSR. The delay information processing method provides an implementation mode for a UE to report a DSR, that is, under the first condition, the DSR is triggered, and/or the DSR is reported. Moreover, a reporting condition for the DSR is limited, so that excessive reporting of the DSR can be avoided, thereby reducing the DSR reporting load.

## Description

### TECHNICAL FIELD

The present disclosure relates to the technical field of communication, and in particular to a method for delay information processing, an information triggering method, an apparatus, a device, and a medium.

### BACKGROUND

The User Equipment (UE) causes the serving base station to obtain the delay information of the uplink data of the UE through DSR information, so that the base station can schedule the UE according to the DSR information provided by the UE.

However, at present, there is no specific manner of how the UE reports the DSR information.

### SUMMARY

Based on this, the present disclosure provides a method for delay information processing, an information triggering method, an apparatus, a device and a medium.

In the first aspect, the present disclosure provides a method for delay information processing. The method includes the following operation.

In a case of the first condition, the DSR is triggered, and/or the DSR is reported.

In the second aspect, the present disclosure provides a method for delay information processing. The method includes the following operation.

In a case of congestion or receiving the first information, or in a case that the first information indicates a specific content or a specific value, the UE performs the first behavior. The first behavior includes at least one of following: enabling packet loss processing for a PDU set; enabling packet loss processing for PSI; enabling processing for congestion; using a specific packet loss timer or timer duration; determining an important or unimportant PDU set; determining a judgment threshold or criterion for the important or unimportant PDU set; deactivating a DRS reporting function, or a DSR mechanism; stopping a DSR reporting or triggering function, or not reporting DSR information; or deconfiguring DSR trigger or reporting.

In the third aspect, the present disclosure provides an information triggering method. The method includes the following operation.

The first information sent by a base station is received. The first information is used to indicate whether UE triggers a Conditional Handover (CHO) evaluation or execution or evaluates other CHO condition, or the first information is used to indicate whether a network saves energy or enters an energy saving state or uses an energy saving technology or when the network device saves energy.

The apparatus for delay information processing includes a receiving module and/or a sending module. The receiving module is configured to trigger a DSR in case of the first condition. The sending module is configured to report the DSR.

The apparatus for delay information processing includes a receiving module. The receiving module is configured to perform the first behavior in a case of congestion or receiving first information, or in a case that the first information indicates a specific content or a specific value. The first behavior includes at least one of following: enabling packet loss processing for a PDU set; enabling packet loss processing for PSI; enabling processing for the congestion; using a specific packet loss timer or timer duration; determining an important or unimportant PDU set; determining a judgment threshold or criterion for the important or unimportant PDU set; deactivating a DRS reporting function, or a DSR mechanism; stopping a DSR reporting or triggering function, or not reporting DSR information; or deconfiguring DSR trigger or escalation.

An information triggering apparatus includes a receiving module. The receiving module is configured to receive the first information sent by a base station. The first information is used to indicate whether the UE triggers a CHO evaluation or execution or evaluates other CHO condition, or the first information is used to indicate whether a network saves energy or enters an energy saving state or uses an energy saving technology or when the network device saves energy.

A UE includes a memory, a processor and a transceiver. The memory is configured to store a computer program, and the processor is configured to execute the computer program for controlling the transceiver, and execute the computer program to implement operations of the method according to any one of the above first or second or third aspects.

A computer-readable storage medium having stored thereon a computer program. When the computer program is executed by a processor, operations of the method according to any one of the first or second or third aspects above are implemented.

A computer program product includes a computer program. When the computer program is executed by a processor, operations of the method according to any one of the above first or second or third aspects are implemented.

The above description is merely an overview of the technical solutions of the present disclosure, and in order to make the technical means of the present disclosure more clearly understood, and to make the technical means can be implemented according to the contents of the specification, and in order to make the above and other objects, features, and advantages of the present disclosure more clearly understood, specific embodiments of the present disclosure are referred to below.

### BRIEF DESCRIPTION OF THE DRAWINGS

Various other advantages and benefits will become apparent to those of ordinary skill in the art upon reading the following detailed description of the embodiments. The drawings are for the purpose of illustrating embodiments only, and are not to be construed as limiting the present disclosure. Also, like reference numerals are used throughout the drawings to denote like parts.
FIG. 1 is a schematic flowchart of a method for delay information processing according to an embodiment of the present disclosure.
FIG. 2 is a schematic flowchart of a method for delay information processing according to another embodiment of the present disclosure.
FIG. 3 is a schematic flowchart of an information triggering method according to an embodiment of the present disclosure.
FIG. 4 is a schematic structural diagram of a MAC CE according to an embodiment of the present disclosure.
FIG. 5 is a schematic structural diagram of a MAC CE according to another embodiment of the present disclosure.
FIG. 6 is a schematic structural diagram of a MAC CE according to another embodiment of the present disclosure.
FIG. 7 is a schematic structural diagram of a MAC CE according to another embodiment of the present disclosure.
FIG. 8 is a schematic structural diagram of a MAC CE according to another embodiment of the present disclosure.
FIG. 9 is a schematic structural diagram of a MAC CE according to another embodiment of the present disclosure.
FIG. 10 is a schematic structural diagram of a MAC CE according to another embodiment of the present disclosure.
FIG. 11 is a schematic structural diagram of a MAC CE according to another embodiment of the present disclosure.
FIG. 12 is a schematic structural diagram of a MAC CE according to another embodiment of the present disclosure.
FIG. 13 is a schematic structural diagram of a MAC CE according to another embodiment of the present disclosure.
FIG. 14 is a schematic structural diagram of a MAC CE according to another embodiment of the present disclosure.
FIG. 15 is a schematic structural diagram of a MAC CE according to another embodiment of the present disclosure.
FIG. 16 is a schematic structural diagram of a MAC CE according to another embodiment of the present disclosure.
FIG. 17 is a schematic structural diagram of a MAC CE according to another embodiment of the present disclosure.
FIG. 18 is a schematic structural diagram of a MAC CE according to another embodiment of the present disclosure.
FIG. 19 is a schematic structural diagram of a MAC CE according to another embodiment of the present disclosure.
FIG. 20 is a schematic structural diagram of a MAC CE according to another embodiment of the present disclosure.
FIG. 21 is a schematic structural diagram of a MAC CE according to another embodiment of the present disclosure.
FIG. 22 is a schematic structural diagram of a MAC CE according to another embodiment of the present disclosure.
FIG. 23 is a schematic structural diagram of a MAC CE according to another embodiment of the present disclosure.
FIG. 24 is a schematic structural diagram of a MAC CE according to another embodiment of the present disclosure.
FIG. 25 is a schematic structural diagram of a MAC CE according to another embodiment of the present disclosure.
FIG. 26 is a schematic structural diagram of a MAC CE according to another embodiment of the present disclosure.
FIG. 27 is a schematic structural diagram of a MAC CE according to another embodiment of the present disclosure.
FIG. 28 is a schematic structural diagram of a MAC CE according to another embodiment of the present disclosure.
FIG. 29 is a schematic structural diagram of a MAC CE according to another embodiment of the present disclosure.
FIG. 30 is a schematic structural diagram of a MAC CE according to another embodiment of the present disclosure.
FIG. 31 is a schematic structural diagram of a MAC CE according to another embodiment of the present disclosure.
FIG. 32 is a schematic structural diagram of a MAC CE according to another embodiment of the present disclosure.
FIG. 33 is a schematic structural diagram of a MAC CE according to another embodiment of the present disclosure.
FIG. 34 is a schematic structural diagram of a MAC CE according to another embodiment of the present disclosure.
FIG. 35 is a schematic structural diagram of a MAC CE according to another embodiment of the present disclosure.
FIG. 36 is a schematic structural diagram of a MAC CE according to another embodiment of the present disclosure.
FIG. 37 is a schematic structural diagram of a MAC CE according to another embodiment of the present disclosure.
FIG. 38 is a schematic structural diagram of a MAC CE according to another embodiment of the present disclosure.
FIG. 39 is a schematic structural diagram of a MAC CE according to another embodiment of the present disclosure.
FIG. 40 is a schematic structural diagram of a MAC CE according to another embodiment of the present disclosure.
FIG. 41 is a schematic structural diagram of a MAC CE according to another embodiment of the present disclosure.
FIG. 42 is a schematic structural diagram of a MAC CE according to another embodiment of the present disclosure.
FIG. 43 is a schematic flowchart of an information triggering method according to an embodiment of the present disclosure.
FIG. 44 is a schematic structural diagram of an apparatus for delay information processing according to an embodiment of the present disclosure.
FIG. 45 is a schematic structural diagram of an apparatus for delay information processing according to another embodiment of the present disclosure.
FIG. 46 is a schematic structural diagram of an information triggering apparatus according to an embodiment of the present disclosure.
FIG. 47 is a schematic structural diagram of UE according to an embodiment of the present disclosure.

### DETAILED DESCRIPTION

Hereinafter, embodiments of the technical solutions of the present disclosure will be described in detail with reference to the accompanying drawings. The following embodiments are merely used to more clearly explain the technical solutions of the present disclosure, and therefore are merely examples, and cannot limit the scope of protection of the present disclosure.

Unless otherwise defined, all technical and scientific terms used herein have the same meanings as commonly understood by those skilled in the art of the present disclosure. The terms used herein are for the purpose of describing specific embodiments only and are not intended to limit the present disclosure. The terms "comprising" and "having" and any variations thereof in the specification and claims of the present disclosure and the above description of the drawings are intended to cover non-exclusive inclusions.

In the description of the embodiments of the present disclosure, the technical terms "first", "second" and the like are only used to distinguish different objects, and cannot be understood to indicate or imply relative importance or implicitly indicate the number, specific order, or primary-secondary relationship of the indicated technical features. In the description of the embodiments of the present disclosure, "a plurality" means two or more unless otherwise explicitly and specifically defined.

Reference herein to an "embodiment" means that a particular feature, structure, or characteristic described in connection with the embodiments may be included in at least one embodiment of the present disclosure. The appearance of the phrase in various places in the specification does not necessarily refer to the same embodiment, nor is it an independent or alternative embodiment that is mutually exclusive from other embodiments. It is explicitly and implicitly understood by those skilled in the art that the embodiments described herein may be combined with other embodiments.

In the description of the embodiments of the present disclosure, the term "and/or" is only used for describing an association relationship between association objects, and represents that there may be three kinds of relationships, for example, A and/or B, may indicate that A exists alone, A and B exist simultaneously, and B exists alone. In addition, the character "/" in the present disclosure generally indicates that there is an "or" relationship between the association objections.

[**0071]** In the description of the embodiments of the present disclosure, the term "a plurality" refers to two or more (including two), similarly, "a plurality of groups" refers to two or more groups (including two groups), and "a plurality of pieces" refers to two or more pieces (including two pieces).

[**0072]** In the description of the embodiments of the present disclosure, the directional or positional relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" and the like is the directional or positional relationship based on shown in the accompanying drawings, and is only for the convenience of describing the embodiments of the present application and simplifying the description, it does not indicate or imply that the apparatus or component referred to must have a specific directional, be constructed and operated in a specific directional, and therefore cannot be understood as a limitation on the embodiments of the present application.

[**0073]** In the description of the embodiments of the present disclosure, unless otherwise explicitly specified and limited, technical terms such as "mounted", "connected", and "fixed" should be understood in a broad sense, for example, they may be fixed connected, detachable connected, or integrated, it may also be a mechanical connection or an electrical connection, it may be directly connected, or indirectly connected through an intermediate medium, or it may be the internal communication of two elements or the interaction of two elements. For those skilled in the art, the specific meanings of the above terms in the embodiments of the present disclosure can be understood according to specific circumstances.

[**0074]** At present, with people's pursuit of speed, latency, high-speed mobility, energy efficiency, and the diversity and complexity of services in future life, the 3GPP International Standards Organization has begun to develop 5G. The main application scenarios of 5G are: enhanced mobile ultra-wideband (eMBB), low latency and high reliability communication (URLLC), and large-scale machine communication (mMTC). eMBB is still aiming at users' access to multimedia content, services and data, and its demand is growing rapidly. On the other hand, since eMBB may be deployed in different scenarios, such as indoors, urban areas, rural areas, etc., its capabilities and needs are quite different, so it cannot be generalized and must be analyzed in detail based on specific deployment scenarios. Typical applications of URLLC include: industrial automation, power automation, telemedicine operations (surgery), traffic safety and security, etc. The typical characteristics of mMTC include: high connection density, small data volume, delay-insensitive services, low cost and long service life of modules, etc. The new radio (NR) access network may also be deployed independently. In the 5G network environment, in order to reduce air interface signaling, quickly restore wireless connections, and quickly restore data services, a new Radio Resource Control (RRC) state, that is, RRC _ INACTIVE state, is set. This state is different from the RRC _ IDLE and RRC _ ACTIVE states. Here, RRC _ IDLE represents that mobility is UE-based cell selection reselection, paging is initiated by the CN, and paging area is configured by the CN. There is no UE AS context on the base station side. No RRC connection exists; RRC _ CONNECTED represents that an RRC connection exists, and the base station and the UE have a UE AS context. The network side knows that the location of the UE is at the specific cell level. Mobility is the mobility controlled by the network side. Unicast data may be transmitted between the UE and the base station. RRC _ INACTIVE represents that mobility is UE-based cell selection reselection, a connection between CN-NR exists, UE AS context exists on a certain base station, paging is triggered by RAN, paging area based on RAN is managed by RAN, and the network side knows that the location of UE is based on the paging area level of RAN.

[**0075]** The eNodeB may allocate downlink or uplink radio resources to each UE according to downlink buffer data in the eNodeB and a Buffer Status Report (BSR) received from the UE, respectively. That is, in the 5G NR BSR process, the UE causes the serving base station to obtain the uplink buffer data volume of the UE through the BSR, so that the base station can schedule the UE according to the data volume information provided by the UE. In order to save the overhead of BSR reporting, a group reporting method is adopted. Each uplink logical channel corresponds to a Logical Channel Group (LCG), multiple uplink logical channels may correspond to the same LCG, and the correspondence relationship between the logical channel (LC) and LCG is configured by RRC of the network. The UE reports the BSR based on the LCG. Each UE in the NR may support up to 8 LCGs. The triggering conditions of the BSR are as follows: 1. In a case that uplink data arrives on a logical channel with higher priority of the UE, a regular BSR will be triggered; 2. In a case that the padding part of the uplink resource allocated for the UE after carrying other uplink data can carry the BSR MAC CE, a padding BSR will be issued; 3. When the retransmission BSR timer retxBSR-Timer expires, and there is currently at least one uplink logical channel to send uplink data, a regular BSR will be triggered; 4. When the period BSR timer periodicBSR-Timer expires, the period BSR will be triggered; If multiple logical channels simultaneously trigger regular BSRs, each of these logical channels triggers a separate regular BSR. The BSR may be carried by the BSR MAC CE. If the terminal triggers the regular BSR, but the terminal does not have uplink resources for transmitting new data or the uplink resources allocated to the terminal for transmitting new data cannot carry data of the uplink logical channel that triggers the regular BSR, the terminal triggers an uplink Scheduling Request (SR).

[**0076]** At the 3GPP RAN # 88e meeting, a study project named "eXtended Reality (XR) and cloud game (CG) evaluations for NR" has been passed. The business studied by this project includes Augmented Reality (AR)/ virtual reality (VR)/Cloud gaming, etc. One of the main businesses of XR/CG is video stream business, its arrival rate (measured in fps, fps is frame per second) may be 30fps, 60fps, 90fps, 120fps, then the corresponding video stream period is {33.33 ms, 16.67 ms, 11.11 ms, 8.33 ms}. The specificity of XR data includes: the size of the data packet is variable and the average value is large. Taking AR/VR with a data rate of 100Mbps as an example, the average value of uplink data packets is 20833 bytes, the maximum value is 31250 bytes, and the minimum value is 10417 bytes. That is, the size of the data packet to be transmitted in each period is between [10417 bytes, 31250 bytes]. In an actual system with 100M bandwidth, transmitting a data packet of 20833 bytes needs to occupy about 4 slots of transmission resources.

[**0077]** In 3GPP RAN2 # 120, RAN2 agrees to report delay information which is associated with data volume. RAN2 will introduce data volume information associated with delay information (e.g. remaining time) in a MAC CE. FFS if this is extension of BSR or new format. FFS how to do that (e.g. what exactly is reported) and how to ensure this information is up-to-date e.g. considering UL scheduling delay.

[**0078]** In 3GPP RAN2 # 122, RAN2 further agrees that the remaining time is derived from the PDCP discard timer value. UE calculates the remaining time based on the PDCP discard timer value. FFS if UE reports one or multiple values. FFS how this is modelled in PDCP specification. FFS which UEs support this.

[**0079]** In 3GPP RAN2 # 123, further agreements are achieved on delay status reporting (DSR). 1) Network can configure the UE whether to trigger delay status reporting. FFS if we have some thresholds per LCG. 2) When UE triggers reporting delay information for a LCG, and UE also reports the buffer status associated with the remaining time.RAN2 aims to define a single MAC CE for the DSR reporting (including the buffer status). FFS if this extends BSR MAC CE or is a new MAC CE. 3) Working assumption: Define a new separate MAC CE for DSR (remaining delay and associated data volume) reporting, e.g. DSR reporting is not coupled with BSR reporting. Detailed Definition of associated data volume is FFS. 4) Support threshold based DSR reporting, e.g. DSR reporting is triggered when remaining delay of a PDU/PDU set is below a NW configured threshold. The threshold is configured per LCG. FFS whether configuring multiple thresholds for a LCG is supported. Definition of remaining time is FFS.

[**0080]** The Delay Status Reporting (DSR) procedure is used to provide the serving gNB with delay status of UL data. This delay status includes remaining time of UL data, which is based on the value of its associated PDCP discardTimer (as specified in clause 7.3 in TS 38.323 [4]) at the time of the first symbol of the PUSCH transmission in which the DSR is sent, as well as the amount of data associated with the reported remaining time. Here, the Radio Resource Control (RRC) controls the DSR operation by configuring the following parameters: a remaining time threshold: the threshold on remaining time of UL data configured for triggering DSR for an LCG. The MAC entity triggers a DSR when the remaining time of a PDU in an LCG, if configured for DSR, becomes shorter than its associated remainingTimeThreshold. This section will be updated after more agreements are made, e.g. a more precise definition on "the amount of data associated with the reported remaining time" needs to be specified. FFS Definition of remaining time. FFS if one or more values are reported for an LCG. FFS if data with delay below the threshold is reported. However, at present, details of how the UE reports the DSR are unclear, and the embodiments of the present disclosure provide a method for delay information processing for solving this problem.

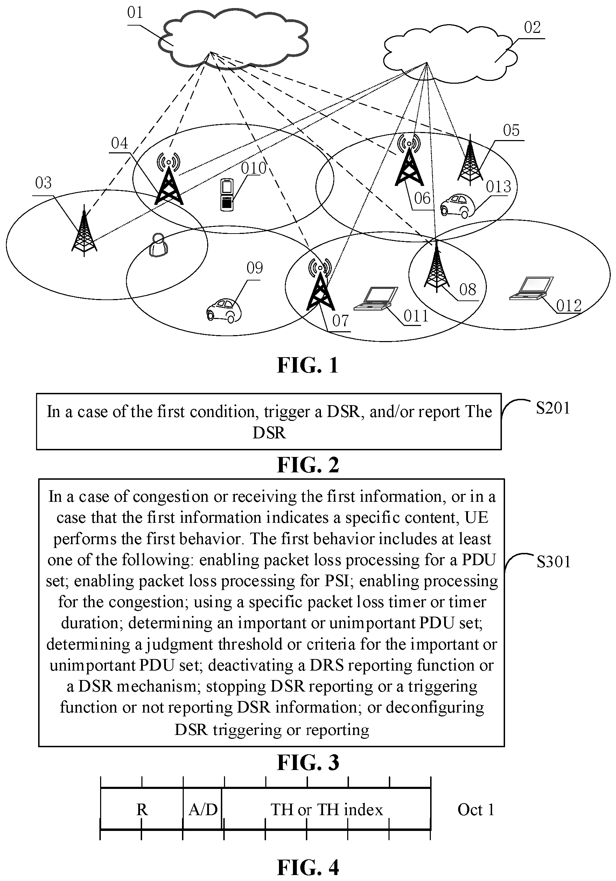

[**0081]** The method for delay information processing provided by the embodiments of the present disclosure may be applied to an application scenario as illustrated in FIG. 1. As illustrated in FIG. 1, the scenario includes a network 01 and a network 02, and the network 01 and the network 02 may be different types of networks. The scenario also includes a base station 03, a base station 04, a base station 05, a base station 06, a base station 07, and a base station 08. The base station 04, the base station 06, and the base station 07 may be macro base stations, and the base station 03, the base station 05, and the base station 08 may be micro base stations, and each base station may perform data communication through the network 01 or the network 02. The scenario also includes a UE 09, a UE 010, a UE 011, a UE 012, and a UE 013, and each UE can communicate with a base station through a network. As illustrated in FIG. 1, this scenario includes a large number of transmission and reception points, and the multiple transmission and reception points may constitute a virtual cell, and the virtual cell may serve one or more UEs. Here, the transmission/reception point may be a network-side device or a terminal device, and the network-side device may include a macro base station, a micro base station, or the like, or may include a core network device, for example, a Mobility Management Entity (MME), a Serving GateWay (S-GW), and the like, which is not limited in the embodiments of the present disclosure. It should be noted that FIG. 1 in the embodiments of the present disclosure is only an illustration of a network architecture, which does not constitute a limitation on the application scenario of the embodiments of the present disclosure.

[**0082]** The UE may be a wireless terminal, which may be a device that provides voice and/or other traffic data connectivity to a user, or a handheld device having a wireless connectivity function, or other processing device connected to a wireless modem. The wireless terminal may communicate with one or more core networks via a Radio Access Network (RAN), the wireless terminal may be a mobile terminal, such as a mobile telephone (or "cellular" telephone) and a computer with the mobile terminal, for example, a portable, pocket-sized, handheld, computer-built or vehicle-mounted mobile device, which exchanges language and/or data with the Radio Access Network. The wireless terminal may also be referred to as a system, a Subscriber Unit, a Subscriber Station, a Mobile Station, a Mobile Station, a Remote Station, a Remote Terminal, an Access Terminal, a User Terminal, a User Agent, a User Device or a User Equipment, and is not limited herein. For another example, the UE may be, but is not limited to, various personal computers, laptops, smartphones, tablets, Internet of Things devices, and portable wearable devices, and the Internet of Things devices may be smart speakers, smart TVs, smart air conditioners, smart vehicle devices, and the like. The portable wearable device may be a smart watch, a smart bracelet, a head-mounted device, or the like, and is not limited in the embodiments of the present disclosure.

[**0083]** Hereinafter, the technical solution of the present disclosure and how the technical solution of the present disclosure solves the above-described technical problems will be described in detail with specific embodiments. The following specific embodiments may be combined with each other, and the same or similar concepts or processes may not be described in detail in some embodiments. Hereinafter, embodiments of the present disclosure will be described with reference to the accompanying drawings.

[**0084]** In one embodiment, as illustrated in FIG. 2, a method for delay information processing is provided, and the application of the method to the UE side in FIG. 1 is described as an example. The method includes the following operation.

[**0085]** In operation S201, in a case of the first condition, a DSR is triggered and/or the DSR is reported.

[**0086]** The first condition may be a condition for avoiding excessive reporting of the DSR, which may be pre-configured or predefined or determined by the RRC. Alternatively, the first condition may include a preset period, that is, in a case that the preset period is satisfied, the DSR is triggered, or, in that case that the preset period is satisfied, the DSR is reported, or in the case that the preset period is satisfied, the DSR is triggered and the DSR is reported. Alternatively, the first condition may further include other conditions.

[**0087]** In the embodiments of the present disclosure, when the UE pre-transmits uplink data, the UE may determine whether the first condition is satisfied, and if the first condition is satisfied, the DSR may be triggered. Alternatively, if satisfied, the DSR may be reported when there are transmission resources. Alternatively, if satisfied, the DSR may be triggered first, and the triggered DSR may be reported in the case that there is a transmission resource. If not, the UE may not trigger and/or report the DSR, or may trigger the uplink scheduling request SR.

[**0088]** The method for delay information processing according to the embodiments of the present disclosure provide an implementation method in which the UE reports the DSR, that is, under the first condition, the DSR is triggered and/or the DSR is reported. Furthermore, by limiting the reporting conditions of the DSR, it is possible to avoid excessive reporting of the DSR. Thereby reducing the DSR reporting load.

[**0089]** In one embodiment, the first condition includes a DSR reporting period, that is, when the above operation S201 is performed, it is specifically executed that in a case that the DSR reporting period is satisfied, the DSR is triggered and/or the DSR is reported.

[**0090]** The DSR reporting period is a reporting period set for the first object, and the first object may be any one of UE, a MAC entity, an LCG, and an LCH. The DSR reporting period may be preconfigured or predefined or determined by the RRC.

[**0091]** In the embodiments of the present disclosure, when the UE pre-transmits uplink data, whether the DSR reporting period is satisfied may be determined, and if satisfied, the DSR may be triggered. Alternatively, if it is satisfied, the DSR may be reported when there is a transmission resource. Alternatively, if satisfied, the DSR may be triggered firstly, and the triggered DSR may be reported when there is a transmission resource.

[**0092]** In one embodiment, the DSR reporting period includes a reporting timer, and/or the DSR is reported in a case that the reporting timer expires.

[**0093]** In the embodiments of the present disclosure, when the UE pre-transmits uplink data, whether the reporting timer expires may be determined, and when it is determined that the reporting timer expires, the DSR may be reported.

[**0094]** In one embodiment, the first condition includes a DSR triggering period. When the above operation S201 is performed, it is specifically performed that in a case that the DSR triggering period is satisfied, the DSR is triggered and/or the DSR is reported.

[**0095]** The DSR triggering period is a triggering period set for the first object, and the first object may be any one of UE, a MAC entity, an LCG, or an LCH. The DSR triggering period may be preconfigured or predefined or determined by the RRC.

[**0096]** In the embodiment of the present disclosure, when the UE pre-transmits uplink data, whether the triggering timer expires may be determined, and when it is determined that the triggering timer expires, the DSR may be triggered.

[**0097]** In one embodiment, the DSR triggering period includes a triggering timer, and/or the DSR may be triggered in a case that the triggering timer expires.

[**0098]** In the embodiments of the present disclosure, when the UE pre-transmits uplink data, whether the triggering timer expires may be determined, and when it is determined that the triggering timer expires, the DSR may be triggered.

[**0099]** In particular, the reporting timer and the triggering timer may be one timer or different timers.

[**0100]** In the above-described related embodiments, the method delay information processing described in FIG. 2 includes at least one of the following.

[**0101]** The DSR is triggered only once in a DSR triggering period.

[**0102]** In a case that a triggering timer expires, the DSR may be triggered.

[**0103]** In a case that the DSR is triggered, a corresponding triggering timer is started.

[**0104]** The DSR is reported only once when the DSR is triggered.

[**0105]** In a case that a reporting timer expires, the DSR may be reported.

[**0106]** In a case that the DSR is reported, a corresponding reporting timer is started.

[**0107]** Further, for the first object, the DSR may be triggered only once in the DSR triggering period.

[**0108]** Further, for the first object, the DSR may be triggered in a case that the triggering timer expires.

[**0109]** Further, for the first object, the DSR may be triggered in a case that the triggering timer expires.

[**0110]** Further, for the first object, in a case that the DSR is triggered, the corresponding triggering timer may be started.

[**0111]** Further, for the first object, the DSR may be reported only once when the DSR is triggered.

[**0112]** Further, for the first object, in a case that the reporting timer expires, the DSR may be reported.

[**0113]** Further, for the first object, in a case that the DSR is reported, the corresponding reporting timer may be started.

[**0114]** Here, the first object may be any one of UE, a Media Access Control (MAC) entity, a London Capital Group (LCG), or a Logical Channel (LCH).

[**0115]** In one embodiment, the method for delay information processing of the embodiment of FIG. 2 further includes the following operation.

[**0116]** The DSR is not triggered and/or the DSR is not reported during running of the first prohibit timer.

[**0117]** In the embodiment of the present disclosure, when the UE transmits uplink data, whether the first prohibition timer runs may be determined, and if it runs, the DSR is not triggered. Alternatively, if it runs, the DSR may not be reported. Alternatively, if it runs, the DSR may not be triggered and the DSR may not be reported. If it is determined that the first prohibit timer does not run, the DSR may be triggered, and/or the DSR may be reported.

[**0118]** In one embodiment, the first prohibit timer may be started in at least one of the following cases: a DSR triggering exists; a DSR reporting exists; a MAC CE carrying DSR information is generated; a DSR or DS information is carried in a MAC PDU or a PUSCH; or the MAC PDU or PUSCH carrying the DSR or DS information is being transmitted or has been transmitted.

[**0119]** Corresponding to the case of the starting of the first prohibit timer in the above embodiment, the method according to the embodiment of FIG. 2 further includes at least one of the following operation. During running of the first prohibit timer, the DSR is not triggered and/or the DSR is not reported. In a case that the first prohibit timer expires or does not run, the DSR may be triggered and/or the DSR may be reported.

[**0120]** In one embodiment, the first prohibit timer may be started in at least one of following cases: the DSR triggering for the first object exists; the DSR reporting for the first object exists; the MAC CE carrying the DSR information for the first object is generated; the DSR or DS information for the first object is carried in the MAC PDU or the PUSCH; or the MAC PDU or the PUSCH carrying the DSR or the DS information for the first object is being transmitted or has been transmitted. The first object may be any one of UE, a MAC entity, an LCG, or an LCH.

[**0121]** Corresponding to the case of the starting of the first prohibit timer in the above embodiment, the method according to the embodiment of FIG. 2 further includes at least one of the following operations. During running of the first prohibit timer, the DSR is not triggered and/or the DSR is not reported for the first object. In the case that the first prohibit timer expires or does not run, the DSR for the first object may be triggered and/or the DSR may be reported.

[**0122]** In an embodiment of the present disclosure, the first prohibit timer is introduced for UE, a MAC entity, an LCG, or an LCH. Alternatively, in the case of DSR reporting for the UE, the MAC entity, the LCG, or the LCH, the first prohibit timer is started, and the DSR information is not triggered or reported for the UE, the MAC entity, the LCG, or the LCH. Alternatively, in the case that the first prohibit timer for the UE, the MAC entity, the LCG, or the LCH expires or does not run, DSR information for the UE, the MAC entity, the LCG, or the LCH may be triggered or reported.

[**0123]** In one embodiment, the method for delay information processing of the embodiment of FIG. 2 further includes the following operation.

[**0124]** The triggered DSR is cleared in a case that at least one of the following cases is satisfied.

[**0125]** The at least one of the above cases includes: a MAC CE carrying the DSR information is generated; the DSR or DS information has been reported; the DSR or DS information is carried in a MAC PDU or PUSCH; or the MAC PDU or the PUSCH carrying the DSR or the DS information is being transmitted or has been transmitted.

[**0126]** In the embodiments of the present disclosure, the UE may report the DSR information through the PUSCH or the MAC CE. Alternatively, for the triggered DSR information, when the DSR information is included in the PUSCH or the MAC CE, that is, after the UE has reported the DSR information based on the PUSCH or the MAC CE, the triggered DSR may be canceled.

[**0127]** In one embodiment, the method for delay information processing of the embodiment of FIG. 2 further includes any one of the following operations.

[**0128]** DSR information is not triggered for the first object for which the DSR information is being triggered or has been triggered.

[**0129]** The DSR information is not triggered or the DSR is not reported for the first object for which the DSR information is being reported or has been reported.

[**0130]** The embodiments of the present disclosure relate to multiple methods for not triggering DSR information, and methods for not triggering and not reporting DSR, which include: not triggering DSR information for the first object that triggers DSR reporting any more; not triggering DSR information for the first object for which DSR information has been triggered any more; not triggering the DSR for the first object for which the DSR is reported; not reporting the DSR for the first object for which the DSR is reported; not reporting the DSR for the first object for which the DSR is reported; or not reporting the DSR for the first object for which the DSR has been reported any more.

[0131] Alternatively, the first object in any of the above embodiments is any one of UE, a MAC entity, an LCG, an LCH, a Packet Data Unit (PDU), a data packet, a PDU set, or a data burst, or the first object is any one of UE, a MAC entity, an LCG, an LCH, a PDU, a data packet, a PDU set, or a data burst, that is configured with a DSR function or enables the DSR.

[**0132]** The above method is illustrated by way of example.

[**0133]** For the DSR reporting function or the DSR triggering function, the LCG or LCH that has triggered the DSR reporting does not trigger the DSR reporting any more; or, the LCG or LCH that has reported the DS information does not trigger the DS information any more. Alternatively, any data in the LCG or the LCH is triggered, and other data cannot be triggered or reported. If the same data in the above LCG or LCH is triggered, other data cannot be triggered or reported.

[**0134]** In one embodiment, the first condition of the embodiment of FIG. 2 may include at least one of the following.

[**0135]** New data or a PDU or a PDU set arrives.

[**0136]** New data or a PDU or a PDU set arrives, and any one of the new data, the PDU, or the PDU set does not trigger DSR information and/or report the DSR information.

[**0137]** New data or a PDU or a PDU set arrives, and any one of the new data, the PDU, or the PDU set does not trigger the DSR information and/or report DSR information, and the second condition is satisfied.

[**0138]** A delay of new data or a PDU or a PDU set is less than a threshold or within the first threshold range.

[**0139]** A delay of new data or a PDU or a PDU set is less than the threshold or within the first threshold range, and any one of the new data, the PDU, or the PDU set does not trigger the DSR information and/or report the DSR information.

[**0140]** A delay of new data or a PDU or a PDU set is less than the threshold or within the first threshold range, and any one of the new data, the PDU, or the PDU set does not trigger the DSR information and/or report the DSR information, and the second condition is satisfied.

[**0141]** In the above embodiment, the new data or the PDU or the PDU set belongs to the second object. Alternatively, the new data or the PDU or the PDU set belongs to the first object. The second object includes any one of data, a PDU, a PDU set, an LCG, an LCH, a MAC entity, or UE.

[**0142]** Further, in the above-described embodiment, the DSR triggering or the DSR reporting is triggered by the second object. Alternatively, the DSR triggering or the DSR reporting is for the second object; or the DSR triggering or DSR reporting is for the first object and the second object.

[**0143]** In the above embodiment, several implementations are provided for the second condition, that is, the second condition includes any one of the following. A delay of the new data, the PDU, the PDU set, a LCH, a LCG, a MAC entity, or UE is less than a preset threshold, or belongs to the first threshold range. A DSR prohibit timer of the new data, the PDU, the PDU set, the LCH, the LCG, the MAC entity, or the UE is not running. The new data, the PDU, the PDU set, the LCH, the LCG, the MAC entity or the UE reaches a DSR reporting timer and/or triggering timer is not running. The new data, the PDU, the PDU set, the LCH, the LCG, the MAC entity, or the UE reaches a DSR reporting period or a triggering period.

[**0144]** In one embodiment, the method for delay information processing of the embodiment of FIG. 2 further includes the following operation.

[0145] For data, a PDU, a PDU set, a LCH, a LCG, a MAC entity, or UE for which the DSR has been triggered, the DSR is not triggered, and/or the DSR is not reported.

[**0146]** Alternatively, for the data, the PDU, the PDU set, the LCH, the LCG, the MAC entity, or the UE for which the DSR has been triggered, and in a case that the third condition is satisfied, the DSR is not triggered, and/or the DSR is not reported.

[**0147]** Alternatively, for the data, the PDU, the PDU set, the LCH, the LCG, the MAC entity, or the UE for which the DSR has been reported, in a case that the third condition is satisfied, the DSR is not triggered and/or the DSR is not reported.

[**0148]** In one embodiment, the method for delay information processing of the embodiment of FIG. 2 further includes the following operation.

[**0149]** In a case that the third condition is satisfied, for the data, the PDU, the PDU set, the LCH, the LCG, the MAC entity, or the UE for which the DSR has been triggered, the DSR is not triggered and/or the DSR is not reported.

[**0150]** In a case that the third condition is satisfied, for the data, the PDU, the PDU set, the LCH, the LCG, the MAC entity, or the UE for which the DSR has been reported, the DSR is not triggered and/or the DSR is not reported.

[**0151]** Alternatively, in a case that the third condition is satisfied, for the data, the PDU, the PDU set, the LCH, the LCG, the MAC entity, or the UE for which the DSR has been triggered, in a case that the fourth condition is satisfied, the DSR is not triggered, and/or the DSR is not reported.

[**0152]** Alternatively, in a case that the third condition is satisfied, for data, PDU, PDU set, LCH, LCG, MAC entity, or UE for which the DSR has been reported, in a case that the fourth condition is satisfied, the DSR is not triggered, and/or the DSR is not reported.

[**0153]** In one embodiment, the method for delay information processing of the embodiment of FIG. 2 further includes the following operation.

[**0154]** When data, a PDU, a PDU set, an LCH, an LCG, a MAC entity, or UE for which the DSR has been triggered exists, for the third object, the DSR is not triggered and/or the DSR is not reported.

[**0155]** Alternatively, data, a PDU, a PDU set, an LCH, an LCG, a MAC entity, or UE for which the DSR has been reported exists, for the third object, the DSR is not triggered, and/or the DSR is not reported.

[**0156]** Alternatively, when the data, the PDU, the PDU set, the LCH, the LCG, the MAC entity, or the UE for which the DSR has been triggered exists, for the third object, in a case that the fifth condition is satisfied, the DSR is not triggered, and/or the DSR is not reported.

[**0157]** Alternatively, the data, the PDU, the PDU set, the LCH, the LCG, the MAC entity, or the UE for which the DSR has been reported exists, for the third object, in a case that the fifth condition is satisfied, the DSR is not triggered, and/or the DSR is not reported.

[**0158]** Alternatively, in a case that the third condition is satisfied, when the data, the PDU, the PDU set, the LCH, the LCG, the MAC entity, or the UE for which the DSR has been triggered exists, for the third object, the DSR is not triggered, and/or the DSR is not reported.

[**0159]** Alternatively, in a case that the third condition is satisfied, when the data, the PDU, the PDU set, the LCH, the LCG, the MAC entity, or the UE for which the DSR has been reported exists, for the third object, the DSR is not triggered, and/or the DSR is not reported.

[**0160]** Alternatively, in the case that the third condition is satisfied, when the data, the PDU, the PDU set, the LCH, the LCG, the MAC entity, or the UE for which the DSR has been triggered exists, for the third object, in a case that the fifth condition is satisfied, the DSR is not triggered and/or the DSR is not reported.

[**0161]** Alternatively, in the case that the third condition is satisfied, when the data, the PDU, the PDU set, the LCH, the LCG, the MAC entity, or the UE for which the DSR has been reported exists, for the third object, in a case that the fifth condition is satisfied, the DSR is not triggered, and/or the DSR is not reported.

[**0162]** The third object in the above embodiments includes any one of the following: a PDU for which the DSR has been triggered and/or reported; a PDU set corresponding to the PDU for which the DSR has been triggered and/or reported; a data burst corresponding to the PDU for which the DSR has been triggered and/or reported; a LCH corresponding to the PDU for which the DSR has been triggered and/or reported; a LCG corresponding to the PDU for which the DSR has been triggered and/or reported; a MAC entity corresponding to the PDU for which the DSR has been triggered and/or reported; UE corresponding to the PDU for which the DSR has been triggered and/or reported; a PDU set for which the DSR has been triggered and/or reported; a data burst corresponding to the PDU set for which the DSR has been triggered and/or reported; a LCH corresponding to the PDU set for which the DSR has been triggered and/or reported; a LCG corresponding to the PDU set for which the DSR has been triggered and/or reported; a MAC entity corresponding to the PDU set for which the DSR has been triggered and/or reported; UE corresponding to the PDU set for which the DSR has been triggered and/or reported; a data burst for which the DSR has been triggered and/or reported; a LCH corresponding to the data burst for which the DSR has been triggered and/or reported; a LCG corresponding to the data burst for which the DSR has been triggered and/or reported; a MAC entity corresponding to the data burst for which the DSR has been triggered and/or reported; UE corresponding to the data burst for which DSR has been triggered and/or reported; a LCH for which the DSR has been triggered and/or reported; a LCG corresponding to the LCH for which the DSR has been triggered and/or reported; a MAC entity corresponding to the LCH for which the DSR has been triggered and/or reported; UE corresponding to the LCH for which the DSR has been triggered and/or reported; a LCG for which the DSR has been triggered and/or reported; a MAC entity corresponding to the LCG for which the DSR has been triggered and/or reported; UE corresponding to the LCG for which the DSR has been triggered and/or reported; a MAC entity for which the DSR has been triggered and/or reported; a MAC entity corresponding to the MAC entity for which the DSR has been triggered and/or reported; or UE for which the DSR has been triggered and/or reported.

[**0163]** The above method is illustrated by way of example:
[**0164]** For an LCG, a DSR may be configured to be reported. The data/PDU/PDU set that triggers the DSR cannot trigger a new DSR reporting, and/or the data/PDU/PDU set for which the DSR information has been reported cannot trigger a new DSR reporting. Alternatively, the DSR may be configured to be reported for the UE, the MAC entity, or the LCH.

[**0165]** Alternatively, for an LCG, DSR information may be configured to be reported, and when new data/PDU/PDU set arrives, the new data/PDU/PDU set or the LCG/LCH corresponding to the new data/PDU/PDU set may trigger a new DSR reporting. For an LCG, DSR may be configured to be reported, and when new data/PDU/PDU set arrives, or new data/PDU/PDU set exists and the new data/PDU/PDU set for which DS information has not been triggered and/or reported, and the third condition (fourth condition or fifth condition) is satisfied, then the new data/PDU/PDU or the corresponding LCG/LCH may trigger new DSR information or report DSR information. Alternatively, the DSR may be configured to be reported for the UE, the MAC entity, or the LCH.

[**0166]** Alternatively, for the DSR reporting function or the DSR triggering function, the LCG or LCH for which the DSR reporting has been triggered does not trigger the DSR reporting any more under the third condition (the fourth condition or the fifth condition), or the LCG or LCH for which the DSR information has been reported does not trigger or report the DSR information any more under the second condition.

[**0167]** In one embodiment, any one of the second condition, or the third condition, or the fourth condition, or the fifth condition in the above embodiments may include a duration and/or a threshold.

[**0168]** The duration represents the duration during which DSR reporting has been triggered, that is, correspondingly, when the above operation of S210 is specifically performed, the following operation is performed. For the LCG or LCH for which the DSR reporting has been triggered does not trigger DSR reporting within the duration during which DSR reporting has been triggered. Alternatively, when the operation of S211 is specifically performed, the following operation is performed. FOR the LCG or the LCH for which the DSR information has been reported does not trigger or report the DSR information within the duration during which the DSR reporting has been triggered. Alternatively, no new DSR is allowed to be triggered or reported within the duration.

[**0169]** Different objects may correspond to different thresholds, and alternatively, different objects may correspond to the same threshold. When corresponding to different thresholds, a new DSR triggering or reporting may be allowed. When corresponding to the same threshold, a new DSR triggering or reporting is not allowed.

[**0170]** The above method is illustrated by way of example.

[**0171]** For the DSR reporting function or the DSR triggering function, the PDU or the PDU set for which the DSR reporting has been triggered does not trigger the DSR reporting any more, or the PDU or the PDU set for which the DRS information has been reported does not trigger or report the DS information any more.

[**0172]** For the DSR reporting function or the DSR triggering function, the PDU or the PDU set for which the DSR reporting has been triggered does not trigger the DSR reporting any more under the third condition (the fourth condition or the fifth condition), or the PDU or the PDU set for which the DSR information has been reported does not trigger or report the DSR information any more under the third condition (the fourth condition or the fifth condition).

[**0173]** On the basis of the above embodiment, the method for delay information processing further includes the following operation(s).

[**0174]** If the DSR has been triggered for the first LCG, the DSR is not triggered any more within the second time period any more, or the DSR for the first LCG within the second time period is not triggered, or the DSR is not triggered any more, or the DSR for the first LCG is not triggered within the second time period, and/or, if the DSR has been reported for the first LCG, the DSR is not reported within the second time period any more, or the DSR for the first LCG is not reported within the second time period, or the DSR is not reported any more, or the DSR for the first LCG is not reported within the second time period.

[**0175]** In the embodiments of the present disclosure, if the first LCG has triggered the DSR information, the DSR information is not triggered within the second time period any more, or the DSR for the first LCG is not triggered within the second time period, or if the first LCG has triggered the DSR information, the DSR is not triggered any more, or the DSR for the first LCG is not triggered within the second time period, and/or if the first LCG has reported the DSR information, the DSR information is not reported within in the second time period any more, or the DSR for the first LCG is not reported within the second time period, or if the first LCG has reported the DSR information, the DSR information is not reported any more, or the DSR for the first LCG is not reported within the second time period.

[**0176]** Further, if the first LCH, the first data, or the first PDU in the first LCG have triggered DSR information, the DSR information is not triggered any more, or the DSR for the first LCG is not triggered, or the DSR information is not triggered within the second time period, or the DSR for the first LCG is not triggered within the second time period, and/or, if the first LCH or the first data or the first PDU in the first LCG has reported DSR information, the DSR information is not reported any more, or the DSR information for the first LCG is not reported, or the DSR information is not reported within the second time period, or the DSR information for the first LCG is not reported within the second time period.

[**0177]** In the embodiments of the present disclosure, if the first LCH or the first data or the first PDU in the first LCG has triggered DSR information, the DSR information is not triggered, or if the first LCH or the first data or the first PDU in the first LCG has triggered DSR information, DSR for the first LCG is not triggered; or if the first LCH or the first data or the first PDU in the first LCG has triggered the DSR information, the DSR information is not triggered within the second time period, or if the first LCH or the first data or the first PDU in the first LCG has triggered the DSR information, the DSR for the first LCG is not triggered within the second time period, and/or if the first LCH or the first data or the first PDU in the first LCG has reported the DSR information, the DSR information is not reported any more, or if the first LCH or the first data or the first PDU in the first LCG has reported the DSR information, DSR for the first LCG is not reported; or if the first LCH or the first data or the first PDU in the first LCG has reported the DSR information, the DSR information is not reported within the second time period, or if the first LCH or the first data or the first PDU in the first LCG has reported the DSR information, the DSR for the first LCG is not reported within the second time period.

[**0178]** On the basis of the above embodiment, for the first LCG or the first LCH, an implementation manner of the method for delay information processing includes the following operation.

[**0179]** If the DSR has been triggered for the first LCG, the DSR is triggered and/or reported, or the DSR for the first LCG is triggered and/or reported, or the DSR for the fifth object is triggered and/or reported, in a case that one of the following conditions is satisfied; and/or if the DSR has been reported for the first LCG, the DSR is triggered and/or reported, or the DSR for the first LCG is triggered and/or reported, or the DSR for the fifth object is triggered and/or reported in a case that one of the following conditions is satisfied.

[**0180]** The conditions in the above embodiments are: a DSR that has been triggered is triggered by the fourth object, and a new DSR to be triggered or reported corresponds to the fifth object; or a DSR that has been reported is for the fourth object, and the new DSR to be triggered or reported corresponds to the fifth object; or the DSR that has been reported is for the fourth object, and the new DSR to be triggered or reported corresponds to the fourth object and the fifth object; or if the DSR has been triggered for the fourth object, and the fifth object satisfies a DSR triggering condition, and a sixth condition is satisfied; or if the DSR has been reported for the fourth object, and the fifth object satisfies the DSR triggering condition, and the sixth condition is satisfied.

[**0181]** The fourth object includes at least one of following: a first LCH belonging to the first LCG, the first LCH, data in the first LCH, a PDU in the first LCH, or a PDU set in the first LCH. The fifth object includes at least one of following: the second LCH belonging to the first LCG, the second LCH, data in the second LCH, a PDU in the second LCH, or a PDU set in the second LCH.

[**0182]** The sixth condition includes a DSR trigger threshold of the second LCH being lower than a DSR trigger threshold of the first LCH, and/or a data priority of the second LCH being higher than a data priority of the first LCH.

[**0183]** On the basis of the above embodiment, for the first LCG or the first LCH, an implementation manner of the method for delay information processing includes the following operation.

[**0184]** If the first LCG has triggered the DSR, the DSR is triggered or reported, or the DSR for the first LCG is triggered or reported, or the DSR for the fifth object is triggered or reported, or the DSR for the UE is triggered or reported in a case that one of the following conditions is satisfied; and/or if the first LCG has reported the DSR, the DSR is triggered or reported, or the DSR for the first LCG is triggered and/or reported, or the DSR for the fifth object is triggered or reported, or the DSR for the UE is triggered or reported in a case that one of the following conditions is satisfied.

[**0185]** The conditions are: a DSR that has been triggered is triggered by the fourth object, and a new DSR to be triggered or reported corresponds to the fifth object; or, a DSR that has been reported is for the fourth object, and a new DSR to be triggered or reported corresponds to the fifth object; or the DSR that has been reported is for the fourth object, and a new DSR to be triggered or reported corresponds to the fourth object and the fifth object; or the DSR that has been reported is for the fourth object, and a new DSR to be triggered or reported corresponds UE or if the fourth object has triggered the DSR, and the fifth object satisfies a DSR triggering condition, and the sixth condition is satisfied; or if the fourth object has reported a DSR, and the fifth object satisfies a DSR triggering condition, and the sixth condition is satisfied.

[**0186]** The fourth object includes at least one of following: the first LCH belonging to the first LCG, the first LCH, data in the first LCH, a PDU in the first LCH, or a PDU set in the first LCH.

[**0187]** The fifth object includes at least one of following: the second LCG, second LCH belonging to the second LCG, data belonging to the second LCG, a PDU belonging to the second LCG, a PDU set belonging to the second LCG, the second LCH belonging to the first LCG, the second LCH, data in the second LCH, a PDU in the second LCH, or a PDU set in the second LCH.

[**0188]** The sixth condition includes that a DSR triggering threshold of the second LCH or the second LCG is lower than the DSR triggering threshold of the first LCH or the first LCG, and/or a data priority of the second LCH or the second LCG is higher than a data priority of the first LCH or the first LCG.

[**0189]** Alternatively, if the first LCG has triggered DSR information, and the second LCG satisfies the DSR triggering condition and the sixth condition is satisfied, the DSR information for the first LCG and the second LCG is triggered, or if the first LCG has triggered the DSR information, and the second LCG satisfies the DSR triggering condition, and the seventh condition is satisfied, the DSR information for the second LCG is triggered.

[**0190]** Alternatively, if the first LCG has triggered DSR information, and the second LCG satisfies the DSR triggering condition and the sixth condition is satisfied, the DSR information for the first LCG and the second LCG is triggered, or if the first LCG has triggered the DSR information, and the second LCG satisfies the DSR triggering condition, and the seventh condition is satisfied, the DSR information for the second LCG is triggered.

[**0191]** The seventh condition described above includes that a DSR triggering threshold of the second LCG is lower than a DSR triggering threshold of the first LCG, and/or a data priority of the second LCG is higher than a data priority of the first LCG.

[**0192]** On the basis of the above embodiment, for the second LCG, an implementation manner of the method for delay information processing includes the following operation.

[**0193]** If the second LCG satisfies the DSR triggering condition, DSR information for the UE or for the second LCG is triggered, or if the first LCG has triggered the DSR information and the second LCG satisfies the DSR triggering condition, the DSR information for the UE or the second LCG is triggered.

[**0194]** On the basis of the above embodiment, for the second LCG, an implementation manner of the method for delay information processing includes the following operation.

[**0195]** If the first LCG has triggered DSR reporting and the second LCG satisfies a DSR triggering condition and an eighth condition is satisfied, DSR information for the UE or for the second LCG is triggered. The eighth condition includes: a DSR triggering threshold of the second LCG is lower than a DSR triggering threshold of the first LCG, and/or a data priority of the second LCG is higher than a data priority of the first LCG.

[**0196]** The first LCG refers to any one LCG and the first LCH refers to any one LCH. The second time period may be preconfigured, predefined, and determined by the RRC.

[**0197]** In the embodiments of the present disclosure, alternatively, if the first LCG has triggered the DSR information, the DSR reporting is not triggered regardless of triggering of the first LCG or triggering of other LCG within the second time period.

[**0198]** In the embodiments of the present disclosure, alternatively, if the first LCG triggers DSR reporting, and if the second LCG satisfies the DSR triggering condition, DSR information for the UE or the second LCG may be triggered. The DSR information for the UE is DSR information for the first LCG and the second LCG.

[**0199]** In the embodiments of the present disclosure, alternatively, if the first LCG triggers DSR reporting, and if the second LCG satisfies the DSR triggering condition, and the DSR triggering threshold of the second LCG is lower than the DSR triggering threshold of the first LCG, DSR information for the UE or the second LCG may be triggered, and/or if the first LCG triggers DSR reporting, and if the second LCG satisfies the DSR triggering condition, and the data priority of the second LCG is higher than the data priority of the first LCG, DSR information for the UE or the second LCG may be triggered. The DSR information for the UE is DSR information for the first LCG and the second LCG.

[**0200]** In the embodiments of the present disclosure, alternatively, if the first LCH has triggered the DSR information, the DSR reporting is not triggered regardless of triggering of the first LCH or triggering of other LCH within the second time period.

[**0201]** The methods in the above embodiments are illustratively illustrated:

[**0202]** If the first LCG has triggered DSR reporting, the DSR reporting is not triggered within the second time period any more (whether it is triggering of the first LCG or triggering of other LCGs). Alternatively, if the first LCG triggers DSR reporting, and if the second LCG satisfies the DSR triggering condition, the DSR for the UE or the second LCG may be triggered, or if the first LCG has triggered DSR reporting, and if the second LCG satisfies the DSR triggering condition, and the DSR triggering threshold of the second LCG is lower than the DSR triggering threshold for triggering the first LCG DSR, the DSR for the UE or the second LCG may be triggered, and/or if the first LCG has triggered DSR reporting, and if the second LCG satisfies the DSR triggering condition, and the data priority of the second LCG is higher than the data priority of the first LCG, the DSR for the UE or the second LCG may be triggered. Alternatively, the DS information corresponding to the first LCG may be reported or not reported any more.

[**0203]** If the first LCH in a LCG has triggered DSR reporting, the DSR reporting is not triggered within the second time period (whether it is triggering of the first LCH or triggering of other LCHs). Alternatively, if one LCG has triggered DSR reporting, which is triggered for the first LCH or PDU/PDU set in the first LCH, and if the second LCH or the PDU/PDU set in the second LCH satisfies the DSR triggering condition, DSR for the second LCH, or for the UE (first LCG and second LCG) may be triggered. Alternatively, if one LCG has triggered DSR reporting, which is triggered for the first LCH or the PDU/PDU set in the first LCH, and if the PDU/PDU set in the second LCH or the second LCH satisfies the DSR triggering condition, and the DSR triggering threshold of the second LCH is lower than the DSR triggering threshold of the first LCH that triggers the LCG DSR, the DSR for the second LCG or the UE (the first LCG and the second LCG) may be triggered, and/or, if one LCG has triggered DSR reporting, which is triggered for the first LCH or the PDU/PDU set in the first LCH, and if the PDU/PDU set in the second LCH or the second LCH satisfies the DSR triggering condition, and the data priority of the second LCH is higher than the data priority of the first LCH, the DSR for the second LCG or the DSR for the UE (the first LCG and the second LCG) may be triggered. Alternatively, the DS information corresponding to the first LCH is reported or not reported any more.

[**0204]** If the first LCH in a LCG has triggered DSR reporting, the DSR reporting is not triggered within the second time period any more (whether it is triggering of the first LCH or triggering of other LCHs). Alternatively, if one LCG has triggered DSR reporting, which is triggered for the first LCH or the PDU/PDU set in the first LCH, and if the PDU/PDU set in the second LCH or the second LCH satisfies the DSR triggering condition, DSR for the second LCH or for the UE (the first LCG and the second LCG) may be triggered. Alternatively, if one LCG has triggered DSR reporting, which is triggered for the first LCH or a PDU/PDU set in the first LCH, and if a PDU/PDU set in the second LCH or the second LCH satisfies the DSR triggering condition, and a DSR triggering threshold of the second LCH is lower than a DSR trigger threshold of the first LCH that triggers the LCG DSR, a DSR for the second LCH or for the UE (first LCG and second LCG) may be triggered, and/or, if one LCG has triggered DSR reporting, which is triggered for the first LCH or the PDU/PDU set in the first LCH, and if the PDU/PDU set in the second LCH or the second LCH satisfies the DSR triggering condition, and the data priority of the second LCH is higher than the data priority of the first LCH, DSR for the second LCH or for the UE (the first LCG and the second LCG) may be triggered. Alternatively, the DS information corresponding to the first LCH is reported or not reported any more.

[**0205]** In one embodiment, a MAC CE including the DSR is a MAC CE with a fixed length, or a MAC CE with a variable length.

[0206] Alternatively, the length of the above MAC CE is related to any one of following: the number of LCGs for which DSR information is reported; a number of pieces of reported DSR information; whether a LCG that is configured to report DSR information has the DSR information; or the number of pieces of DSR information that needs to be reported or is reported in the LCG that is configured to report the DSR information.

[**0207]** The method in the above-described embodiment is illustratively illustrated: the MAC CE including DSR information is a MAC CE with a variable size. Alternatively, the length of the MAC CE is affected by the number of LCGs for which the DSR is reported, or whether the LCG that is configured to report the DSR has DS information reporting, or how much pieces of delay information is to be reported in the LCG that is configured to report the DSR.

[**0208]** Alternatively, the MAC CE may include the following information indications: an LCG identifier, an LCH identifier, DSR information, a data volume corresponding to the DSR information, and a data volume corresponding to the LCG or the LCH.

[**0209]** Alternatively, one MAC CE may include one piece of DSR information or multiple pieces of DSR information.

[**0210]** Alternatively, one MAC CE may include DSR information of one LCG or one LCH, DSR information of multiple LCGs or LCHs, or DSR information of specific LCH(s) or LCG(s).

[0211] Alternatively, the DSR information is delay value(s), delay index/threshold(s), or delay range(s).

[**0212]** Alternatively, the data volume information of data volume corresponding to the DSR information is data volume information corresponding to delay value(s), or data volume information of delay index(s)/threshold(s), or data volume information of delay range(s), or data volume information corresponding to each delay value, or data volume information of each delay index/threshold, or data volume information of each delay range, or data volume information corresponding to specific delay value(s), or data volume information of specific delay index(s)/threshold(s), or data volume information of specific delay range(s).

[**0213]** Alternatively, the above data volume information is information corresponding to the LCH, the LCG, the MAC entity, the UE, or data satisfying the DSR triggering condition or the DSR reporting condition, or the data volume information is information corresponding to the LCH, the LCG, the MAC entity, the UE, or data that triggers the DSR or reports the DSR.

[**0214]** Alternatively, one MAC CE includes DSR information, and the DSR information is information corresponding to data of an LCG or LCH that is configured with or enables the DSR, or the DSR information is information corresponding to an LCG that is configured with or enables the DSR, or the DSR information is information corresponding to an LCH that is configured with or enables the DSR, or the DSR information is information corresponding to UE that is configured with or enables the DSR, or the DSR information is information corresponding to a MAC entity that is configured with or enables the DSR.

[**0215]** Alternatively, the information is information corresponding to an LCH or an LCG or an MAC entity or the UE or data that satisfies a DSR triggering condition or a DSR reporting condition, or the information is information corresponding to an LCH or an LCG or a MAC entity or a UE, or data that triggers the DSR or reports the DSR.

[**0216]** Alternatively, the MAC CE does not include DSR information of the first LCG or LCH that does not trigger the DSR or does not satisfy the DSR triggering condition, or does not include DSR information of the first LCG or LCH that does not satisfy the DSR reporting. Alternatively, the MAC CE includes only DSR information of the second LCG or LCH that triggers the DSR or satisfies the DSR triggering condition, or the MAC CE includes only DSR information of the second LCG or LCH that satisfies the DSR reporting; or the MAC CE further includes DSR information of the first LCG or LCH that does not satisfy the condition of triggering DSR or reporting DSR.

[**0217]** In one embodiment, an implementation manner of the method for delay information processing includes at least one of the following operations.

[**0218]** For one LCG or one LCH, one piece of DSR information or specific number of pieces of DSR information is reported.

[**0219]** Alternatively, one piece of DSR information or specific number of pieces of DSR information is reported for one LCG that satisfies the DSR reporting condition or the condition for triggering the DSR. Alternatively, one piece of DSR information or specific number of pieces of DSR information is reported for each LCG that satisfies the DSR reporting condition or the condition for triggering the DSR. Alternatively, one piece of DSR information or specific number of pieces of DSR information is reported for specific number of LCG(s) satisfying the DSR reporting condition or the condition for triggering the DSR. Alternatively, one piece of DSR information or specific number of pieces of DSR information is reported for one LCH that satisfies the DSR reporting condition or the condition for triggering the DSR. Alternatively, one piece of DSR information or specific number of pieces of DSR information is reported for each LCH that satisfies the DSR reporting condition or the condition for triggering the DSR condition. Alternatively, one piece of DSR information or specific number of pieces of DSR information is reported for specific number of LCH(s) satisfying the DSR reporting condition or the condition for triggering the DSR.

[**0220]** Alternatively, for the LCG that is configured with the DSR reporting, one MAC CE including the DS information includes only delay (DS) information of one LCG or specific number of LCG(s). Alternatively, for the LCG that is configured with the DSR reporting, one MAC CE including DS information includes delay information of the LCG(s) that is (are) configured with DSR reporting. Alternatively, for the LCG that is configured with DSR reporting, one MAC CE including DS information includes only delay information of LCG(s) that trigger(s) DSR reporting or satisfies the DSR reporting condition.

[**0221]** Alternatively, for the first LCG, indication information or indication bit indicating whether DSR reporting exists is indicated. Alternatively, if the indication information or the indication bit exists and the information indication bit does not exist, the MAC CE is a MAC CE with a variable length, and/or the MAC CE may not carry the delay information of the first LCG. Alternatively, one or more first LCGs may exist.

[**0222]** Alternatively, if the included LCG does not satisfy the DSR reporting condition or does not include the first LCG that triggers DSR reporting, the UE may not report the DSR of the first LCG, or the DSR that does not include the DSR for the first LCG is reported in the MAC CE. Alternatively, a specific bit in the MAC CE indicates which LCG(s) does not report the DSR, or indicates that the first LCG does not report the DSR. Alternatively, one or more first LCGs may exist.

[**0223]** Alternatively, only one or a specific number of pieces of delay (DS) information is reported for one LCG. Alternatively, for one LCG group, only one or a specific number of pieces of delay (DS) information is reported for each LCH or specific LCH(s) or specific number of LCH(s) in the LCG group. Alternatively, for one LCG group, only one or a specific number of pieces of delay (DS) information is reported for LCH(s), in the LCG group, that satisfies the DSR reporting condition or triggers DSR reporting.

[**0224]** Alternatively, for the first LCH, indication information or indication bit indicating whether DSR reporting exists is indicated. Alternatively, if the indication information or the indication bit exists and the information indication bit does not exist, the MAC CE is a MAC CE with a variable length, and/or the MAC CE may not carry the delay information of the first LCH. One or more first LCH may exist. The first LCH(s) is(are) LCH(s) in the same LCG or different LCGs.

[**0225]** Alternatively, if the included LCH does not satisfy the DSR reporting condition or does not include the first LCH that triggers DSR reporting, the UE may not report the DSR of the first LCH, or the DSR that does not include the DSR for the first LCH is reported in the MAC CE. Alternatively, a specific bit in the MAC CE indicates which LCH(s) does not report the DSR, or indicates that the first LCH does not report the DSR. Alternatively, one or more first LCHs may exist. The first LCH(s) is(are) LCH(s) in the same LCG or different LCGs.

[**0226]** In one embodiment, an implementation manner of the delay information processing method for delay information processing includes the following operation.

[**0227]** One piece of DSR information is reported for each LCH or specific LCH(s) or specific number of LCH(s) in an LCG group. Alternatively, specific number of pieces of DSR information is reported for each LCH, specific LCH(s), or specific number of LCH(s) in one LCG group. Alternatively, DSR information for one piece of data or each piece of data or a specific number of data or one data packet or each data packet or specific number of data packet(s) is reported for one LCH, or one LCG.

[**0228]** In one embodiment, an implementation manner of the method for delay information processing includes the following operation.

[**0229]** DSR information is reported for an LCH, in one LCG, that satisfies a DSR reporting condition or a condition for triggering the DSR. Alternatively, specific number of pieces of DSR information is reported for an LCH, in one LCG, that satisfies the DSR reporting condition or the condition for triggering the DSR.

[**0230]** Alternatively, the MAC CE in the above embodiment includes second indication information or the second indication bit for the first LCH, and the second indication information or the second indication bit is used to indicate whether DSR information of the first LCH is reported or included.

[0231] Alternatively, in the above embodiment, for the first LCH, if the MAC CE includes indication information or an indication bit indicating DSR reporting, the indication information or the indication bit indicates that DSR information is not reported, and the length of the MAC CE is variable, and/or, if the MAC CE includes indication information or an indication bit indicating DSR reporting, the indication information or the indication bit indicates that the DSR information is not reported, and the MAC CE does not carry the DSR information of the first LCH.

[**0232]** Alternatively, the indication information or the indication bit in the above-described embodiment is not used to indicate the LCH that does not report DSR information, or the indication information or the indication bit is used to indicate that the first LCH does not report the DSR information.

[**0233]** Alternatively, the MAC CE does not include DSR information of the first LCG or LCH that does not trigger the DSR or does not satisfy the DSR reporting condition, or the MAC CE does not include DSR information of the first LCG or LCH that does not satisfy the DSR reporting condition. Alternatively, the MAC CE includes only DSR information of the second LCG or LCH that triggers the DSR or satisfies the DSR reporting condition, or the MAC CE includes only DSR information of the second LCG or LCH that satisfies the DSR reporting. Alternatively, the MAC CE further includes DSR information of the first LCG or LCH that does not satisfy the condition for triggering the DSR or reporting the DSR.

[**0234]** In one embodiment, when triggering the DSR information, one of the following is included.

[**0235]** Any one PDU in a PDU set may trigger DSR information.

[**0236]** Alternatively, specific PDU(s) in one PDU set may trigger DSR information.

[**0237]** Alternatively, if the reported DSR information is DSR information of the PDU set, any one PDU in the PDU set may trigger the DSR information.

[**0238]** Alternatively, if the reported DSR information is the DSR information of the PDU set, the specific PDU(s) in the PDU set may trigger the DSR information.

[**0239]** The reported DSR information in the above embodiment is DSR information of any one PDU in the PDU set. Alternatively, the reported DSR information is DSR information of specific PDU(s) in the PDU set.

[**0240]** Alternatively, the reported DSR information may include: for the sixth object, reporting one or more pieces of DSR information. The sixth object is an LCG or an LCH or a PDU set or a data burst or a UE.

[**0241]** Alternatively, the sixth object includes any one of following: all PDUs, all PDU sets, all LCHs, or all LCGs in a buffer. Alternatively, the sixth object includes any one of following: all PDUs, all PDU sets, all LCHs, or all LCGs corresponding to a delay. Alternatively, the sixth object includes any one of following: all PDUs, all PDU sets, all LCHs, or all LCGs corresponding to the delay and configured with DSR reporting in the buffer. Alternatively, the sixth object includes any one of following: all PDUs, all PDU sets, all LCHs, or all LCGs configured with DSR reporting in the buffer.

[**0242]** Alternatively, the DSR information in the above embodiment includes any one of delay threshold information, delay segment information, delay index information, delay value information, or delay information for different PDU sets for one burst data, or the DSR information corresponds to any one of delay threshold, delay segment, delay index, delay value, or delay information of different PDU sets for one burst data.

[**0243]** Alternatively, the DSR information in the above-described embodiment includes minimum delay information, or DSR information corresponding to a PDU or a PDU set for which the DSR information has not been reported.

[**0244]** Alternatively, the DSR information includes information for a data volume to be transmitted of a corresponding delay segment of the sixth object, or information for all data volumes to be transmitted of the sixth object.

[**0245]** Based on the above embodiment, a specific optional implementation manner is provided.

[**0246]** If the reported delay is the delay of one PDU set, any PDU of the PDU set may trigger the reporting delay, or only specific PDU(s) (such as the first PDU) may trigger the delay reporting. Alternatively, delay information of one PDU set is reported, and the information is delay information of any PDU set or delay information of specific PDU set(s).

[**0247]** Alternatively, once PDU set based operation is enabled, the UE judges the DSR triggering condition based on the first PDU of that PDU set, i.e. for an LCG, the UE triggers a DSR once the remaining time of the first PDU of that PDU set in that LCG is lower than the NW configured threshold.

[**0248]** Alternatively, once PDU set based operation is enabled, the reported remaining time of a PDU set in the DSR procedure equals or derives by the remaining time of discardTimer associated with the first SDU of this PDU set.

[**0249]** For one PDU, the remaining time or the remaining time of the PDU reported in the DSR procedure, is equal to the remaining time of the discardTimer associated with the first SDU of the PDU set, or is associated with the remaining time of the discardTimer associated with the first SDU of the PDU set.

[**0250]** Alternatively, the multiple pieces of DSR information, DSR data included in one MAC CE, or the number of DSRs reported for one LCH or one LCG in the above-described embodiment is determined by any of the following manners: preconfigured; predefined; indicated by RRC; determined by UE; or a fixed value.

[**0251]** Alternatively, a range, a delay index, a delay threshold, a maximum value, or a minimum value of the first delay information in the DSR information in the above-described embodiment is determined by any one of the following manners: preconfigured; predefined; indicated by RRC; or a fixed value.

[**0252]** Based on the above-described embodiments, several specific optional implementation manners are given.

[0253] First, for an LCG (object) or for an LCH (object), a method for reporting one piece of delay information includes the following operation.

[**0254]** Alternatively, the UE may report one piece of delay information of all PDUs/PDU sets/LCH/LCG in the current buffer, or report one piece of delay information of all PDUs/PDU sets/LCG/LCG that are configured with DSR reporting in the current buffer.

[**0255]** Alternatively, the delay information is information of a delay threshold or delay segment information. For example, the UE reports the delay information, and the delay information represents that the UE has a data packet whose delay is less than the first threshold.

[**0256]** Alternatively, the delay information is delay threshold information, delay segment information, delay index information, delay value information, or delay information for different PDU sets of one burst data, or the delay information for different PDU sets of the entire data packet of one burst data, or the delay information for one PDU set of the burst data.

[**0257]** Alternatively, the delay information is minimum delay information, or delay information corresponding to a PDU/PDU set for which the delay information has not been reported.

[**0258]** Alternatively, the delay information is information of a data volume to be transmitted corresponding to the delay (segment) for the object, or information of all data volumes to be transmitted for the object.

[**0259]** Second, for one LCG (object), or for one LCH (object), a method for reporting multiple pieces of delay information includes the following operation.

[**0260]** Alternatively, the UE may report delay information (multiple pieces or all) of all PDUs/PDU sets/LCH/LCG in the current buffer.

[**0261]** Alternatively, the UE may report delay information (multiple pieces or all) of all PDUs/PDU sets/LCH/LCG that are configured with DSR reporting in the current buffer.

[**0262]** Alternatively, multiple pieces of delay information are multiple pieces of delay segment information. For example, when the UE reports multiple pieces of delay segment information, it represents that the UE has data to be transmitted satisfying the delay segments in the delay segments reported by the UE.

[**0263]** Alternatively, the delay information is delay threshold information, delay segment information, delay index information, delay value information, or delay information for different PDU sets of one or more bursts.

[**0264]** Alternatively, the delay information is the several pieces of minimum delay information, or delay information (alternatively, the several pieces of minimum delay information) corresponding to the PDUs/PDU sets that have not reported the delay information.

[**0265]** Alternatively, the multiple pieces of delay information are information of the data volume to be transmitted corresponding to each reported delay (segment) for the object, or information on all data volumes to be transmitted for the object.

[**0266]** Alternatively, the number N of multiple pieces of delay information is preconfigured or predefined or determined by an RRC indication, or determined by UE, or fixed. The delay information is delay value information, or delay segment information, or delay index information, which is preconfigured or predefined or determined by RRC indication. If it is delay index or delay segment information, its range or maximum or minimum value is preconfigured or predefined or determined by RRC indication, or fixed.

[**0267]** The method for delay information processing in any of the above embodiments will be described below as an example.

[**0268]** For example, if the DSR reporting is configured for LCG1 and LCG2, if the LCG1 triggers DSR reporting (for example, the delay of the LCG1 is less than the first threshold), the DSR information of the LCG1 is not triggered or reported within the first time period, and/or the UE reports the delay information (one piece or more pieces) of the LCG1. Further, the UE may report delay information of other LCGs (such as LCG2). Further, corresponding data volume information may be included in the reporting.

[**0269]** For example, if the DSR reporting is configured for LCG1 and LCG2. If LCG1 triggers DSR reporting (for example, the delay of LCG1 is less than the first threshold), DSR information of the UE (including the DSR information of LCG1 and LCG2) is not triggered or reported within the first time period, and/or the UE reports delay information (one piece or more pieces) of LCG1. Further, the UE may report delay information of other LCGs (such as LCG2). Further, corresponding data volume information may be included in the reporting.

[**0270]** For example, if the DSR reporting is configured for LCG1 and LCG2. If LCG1 has triggered DSR reporting (for example, the delay of LCG1 is less than the first threshold), and LCG2 triggers DSR reporting (further, it may include that the third reporting prohibit timer for LCG2 is not running), the UE reports the delay information (one piece or more pieces) of LCG2. Further, the UE may report delay information of other LCGs (such as LCG1). Further, corresponding data volume information may be included in the reporting.

[**0271]** For example, if the DSR reporting is configured for LCG1 and LCG2. If LCG1 has triggered DSR reporting (for example, the delay of LCG1 is less than the first threshold), and LCG2 triggers DSR reporting (further, it may include that the third reporting prohibit timer for LCG2 is not running), and the DSR triggering threshold of LCG2 is different from (for example, less than or greater than) the DSR triggering threshold of LCG1 and/or the priority of LCG2 is higher than that of LCG1, the UE reports the delay information (one piece or more pieces) of LCG2. Further, the UE may report delay information of other LCGs (such as LCG1). Further, corresponding data volume information may be included in the reporting.

[**0272]** For example, for the triggered DSR, the UE reports the DSR only when the DSR reporting period is satisfied, or reports the DSR only when the DSR reporting timer expires.

[**0273]** For example, the UE reports one piece of DS information for one LCG that is configured to report DSR. The DS information is used to inform the network that there is a packet whose delay is less than the first threshold, or to inform the network of a delay range, a delay index, or a delay value of a packet with the minimum delay in the LCG. Alternatively, the DS information may indicate data volume information for the delay.

[**0274]** For example, the UE reports multiple pieces of DS information for one LCG that is configured with DSR reporting. The DS information is used to tell the network that packets with delays within different ranges or indexes exist, or to tell the network within which delay ranges or indexes the packets existed in the LCG are. Alternatively, the DS information indicates the data volume information of the packet corresponding to the delay. For example, the UE reports three pieces of delay information of LCG1, respectively corresponding to three delay time segments (beginning from the minimum delay or delay segment), and reports data volume information for different delay information.

[**0275]** For example, method 1: Only one remaining time info is reported for the associated LCG. The remaining time is the shortest value of the remaining times of the PDU sets in the associated LCG. Method 2: Multiple remaining time info is reported for the associated LCG. Each remaining time info is associated with an individual PDU set which is buffered in the associated LCG.... Method 3: Multiple remaining time info is reported for the associated LCG. Each remaining time info is associated with an individual delay range in which the delay of available data of this LCG is distributed. The number as well as the min/max value of the delay range is fixed or configured.

[**0276]** Compared to Alt 2, Alt1/3 is preferred due to the controlled signaling overhead of in one reporting. In addition, to avoid frequent DSR triggering/reporting of a specific LCG, we assume to introduce a per-LCG DSR prohibit timer, i.e. when the prohibit timer for a LCG is running, the UE does not trigger/report the DSR for this LCG. With the assumption, Alt 3 is preferred since, besides the most urgent requirement, Alt3 contains enough delay info to let the gNB know the delay status of that LCG.

[**0277]** For example, Solution 1: Only one DS info is reported for the associated LCG. The DS info is associated with the shortest value of the remaining times in the LCG. Solution 2: More than one DS info is reported for the associated LCG. Solution 2-1: Each DS info is associated with an individual PDU/PDU set which is buffered in the LCG. Solution 2-2: Several delay ranges are designed for the delay status report, which covers the time distribution of all PDU/PDU sets in an LCG. Each DS info represents an individual delay range. Compared to other solutions, Solution 2-1 may have the uncontrolled signalling overhead issue. As multiple PDU/PDU sets in an LCG may arrive one-by-one, several DSRs would be triggered in a short time duration, which definitely induces frequent DSR triggering and reporting. To resolve such this issue, a per-LCG DSR prohibit timer could be considered. Accordingly, the UE would not trigger or report a DSR for a specific LCG if its DSR prohibit timer is running. Based on the above assumption, Solution 2-2 is preferred since, besides the reporting of the most urgent requirement, Solution 2-2 contains enough delay info to let the gNB know the delay status of that LCG. In the MAC CE for DSR, more than one DS info is reported for the associated LCG. Each DS info represents an individual delay range.

[**0278]** For example, the MAC CE including the DSR includes one or more pieces of delay information, and each piece of delay information corresponds to a delay range, and/or corresponding data volume information (for example, data volume corresponding to the delay value or delay index or delay range).

[**0279]** Any of the above-described embodiments can achieve an effect of reducing the DSR reporting load, and any of the above-described embodiments may be used in combination with other embodiments or may be used alone.

[**0280]** In one embodiment, as illustrated in FIG. 3, another delay information processing method is provided, that is, a processing method under congestion control, is further provided, and the application of the method to the UE side in FIG. 1 is described as an example, and includes the following operation.

[**0281]** In operation S301, in a case of congestion or receiving the first information, or in a case that the first information indicates a specific content or a specific value, the UE performs the first behavior. The first behavior includes at least one of following: enabling packet loss processing for a PDU set; enabling packet loss processing for PSI; enabling processing for congestion; using a specific packet loss timer or timer duration; determining an important or unimportant PDU set; determining a judgment threshold or criterion for the important or unimportant PDU set; deactivating a DRS reporting function, or a DSR mechanism; stopping a DSR reporting or triggering function, or not reporting DSR information; or deconfiguring DSR triggering or reporting.

[**0282]** The indication may indicate, for example, the meaning of the specific content or the specific value, for example, indicate enabling packet loss processing; enabling packet loss processing for PDU set; enabling packet loss processing for PSI; enabling processing for congestion; using a specific packet loss timer or timer duration; determining an important or unimportant PDU set; determining the judgment threshold or criterion for the important or the unimportant PDU set; deactivating the DRS reporting function, or the DSR mechanism; stopping DSR reporting or triggering function, or not reporting DSR information; or deconfiguring DSR triggering or reporting.

[**0283]** In the embodiments of the present disclosure, when the network side notifies the UE of congestion or sends the first information to the UE, the UE may perform an operation related to packet loss processing or perform an operation related to not reporting the DSR processing in this case. Here, the operation related to the packet loss processing may be specifically implemented by enabling the packet loss processing for the PDU set, enabling the processing for congestion, using a specific packet loss timer or timer duration, determining an important or unimportant PDU set to implement the packet loss processing, and determining a judgment threshold or criterion of the important or unimportant PDU set to implement the packet loss processing. The operation related to the DSR reporting process may be specifically implemented by deactivating the DRS reporting function, or by the DSR mechanism, or may be implemented by stopping the DSR reporting or triggering function, or may be implemented by not reporting DSR information, or may be implemented by deconfiguring the DSR triggering or reporting.

[**0284]** The method for delay information processing according to the embodiments of the present disclosure may realize processing in a congestion situation and processing for DSR, so that excessive DSR reporting can be avoided in a congestion situation, and the effect of reducing resource overhead can be achieved.

[**0285]** Alternatively, in the above embodiment, the UE performs at least one of the following operation: not triggering the DSR, not reporting the DSR, stopping the DSR function, stopping the DSR triggering or reporting, deconfiguring the DSR mechanism, deconfiguring the DSR triggering or reporting, deactivating the DSR mechanism, or deactivating the DSR triggering or reporting include at least one of: clearing triggered DSR information; stopping all timers corresponding to the DSR information; deactivating configured DRS reporting function, or stopping a unconfigured DSR reporting function, or stopping triggering, reporting, and generating MAC CE function; or clearing all DSR information.

[**0286]** In the present embodiment, the triggered DSR information may be cleared for the DSR reported by the PUSCH and the MAC CE, thereby reducing resource occupancy in the buffer.

[**0287]** Alternatively, the DSR information in the above-described embodiment is DSR information of an object whose importance is lower than the first preset threshold, or information of a DSR of an object determined to be unimportant, or information of a DSR of an object whose priority is lower than the second preset threshold, or information of a DSR of an object determined to be a low priority. The object includes any one of a PDU, a PDU set, an LCG, or an LCH.

[**0288]** The degree of importance of the DSR information, whether the DSR information is important, the first preset threshold value, the second preset threshold value, and the priority of the DSR information may be preconfigured, predefined, or given by Radio Resource Control (RRC). In the embodiments of the present disclosure, the UE may compare the importance degree of the DSR information, and select the DSR information of the object whose importance degree is lower than the first preset threshold value as the DSR information for performing the operation of not reporting the DSR. Alternatively, the UE may determine whether the DSR information is important, and use the unimportant DSR information as the DSR information for performing the operation of not reporting the DSR. Alternatively, the UE may compare the priority of the DSR information, and use the DSR information whose priority is lower than the second preset threshold as the DSR information for performing the operation of not reporting the DSR. Alternatively, the UE may directly use the DSR information with the low priority as the DSR information for performing the operation of not reporting the DSR. The above-described operations may be performed for DSR information of different objects, for example, for any one of PDU, PDU set, LCG, and LCH.

[**0289]** In the present embodiment, specific DSR information is processed, and is processed based on the importance, priority, and the like thereof, so that the resource overhead can be reduced on the basis of ensuring effective data transmission.

[**0290]** Alternatively, the degree of importance or the priority in the above embodiment is determined by any one of the following manners: determined by UE; determined based on a threshold issued by a network; a priority of a LCH or a LCG; a threshold determined by the UE; feature information of the first object; indication information of the network; or an identifier of the LCG or LCH.

[**0291]** Further, the threshold or identifier or priority or the feature of the first object in the above embodiment is determined by any one of the following manners: preconfigured; configured by RRC; indicated by the network; configured in the first information; or determined by the UE.

[**0292]** In one embodiment, the method for delay processing of FIG. 3 further includes the following operation.

[**0293]** In the logical channel prioritization (LCP) procedure, a priority of a MAC CE corresponding to a DSR is set to be lower than a priority of data, or in the LCP procedure, the priority of the MAC CE corresponding to the DSR is set to the lowest.

[**0294]** In this embodiment, the UE may set the priorities of the MAC CEs corresponding to the DSRs of all objects to be lower than the priority of the data in the LCP procedure, or set the priorities of the MAC CEs corresponding to the DSRs of all objects to the lowest in the LCP procedure. Alternatively, in the LCP procedure, the UE may set the priorities of the MAC CEs corresponding to the DSRs of a part of objects to be lower than the priority of the data, or may set the priorities of the MAC CEs corresponding to the DSRs of a part of objects to the lowest in the LCP procedure.

[**0295]** Further, the above method further includes the following operation.

[**0296]** In the LCP procedure, the priority of the MAC CE corresponding to the DSR of the specific object is set to be lower than the priority of the data, or in the LCP procedure, the priority of the MAC CE corresponding to the DSR of the specific object is set to the lowest.

[**0297]** The specific object includes any one of a specific PDU, a specific PDU set, a specific LCG, or a specific LCH. Alternatively, the specific object includes any one of a PDU, a PDU set, an LCG, or an LCH with a low priority or any one of an unimportant PDU, an unimportant PDU set, an unimportant LCG, or an unimportant LCH. Alternatively, the specific object includes any one of a PDU, a PDU set, an LCG, or an LCH with a low priority lower than the first threshold. Alternatively, the specific object includes any one of a PDU, a PDU set, an LCG, or an LCH whose importance is lower than the second threshold.

[**0298]** In one embodiment, when the UE performs the first behavior, the UE may further specifically perform the following operation.

[**0299]** DSR information is triggered and DSR information is not reported. Alternatively, for a specific object, the DSR information is triggered, and the DSR information is not reported. The specific object includes any one of a specific PDU, a specific PDU set, a specific LCG, or a specific LCH. Alternatively, the specific object includes any one of a PDU, a PDU set, a LCG, or a LCH with a low priority, or any one of an unimportant PDU, an unimportant PDU set, an unimportant LCG, or an unimportant LCH. Alternatively, the specific object includes any one of a PDU, a PDU set, an LCG, or an LCH with a low priority lower than the first threshold. Alternatively, the specific object includes any one of a PDU, a PDU set, an LCG, and an LCH whose importance is lower than the second threshold.

[**0300]** In one embodiment, when the UE performs the first behavior, the UE may further specifically perform the following operation.

[**0301]** DSR information is not triggered, or DSR information is not reported. Alternatively, for a specific object, DSR information is not triggered, or DSR information is not reported. The specific object includes any one of a specific PDU, a specific PDU set, a specific LCG, or a specific LCH. Alternatively, the specific object includes any one of a PDU, a PDU set, a LCG, or a LCH with a low priority, or any one of an unimportant PDU, an unimportant PDU set, an unimportant LCG, or an unimportant LCH.

[**0302]** In one embodiment, when the UE performs the first behavior, the UE may further specifically perform the following operation.

[**0303]** DSR is not triggered because a Packet Data Convergence Protocol (PDCP) discard timer expires, or the DSR is not triggered based on a delay being less than the first threshold, or the DSR information is not triggered based on a duration of a PDCP packet loss timer. Alternatively, for a specific object, DSR is not triggered because the PDCP discard timer expires, or the DSR is not triggered based on the delay being less than the first threshold, or the DSR information is not triggered based on the duration of the PDCP packet loss timer.

[**0304]** Alternatively, the DSR is not reported because the PDCP discard timer expires; or the DSR is not reported based on the delay being less than the first threshold, or the DSR information is not reported based on the duration of the PDCP packet loss timer.

[**0305]** Alternatively, for a specific object, the DSR is not reported because the PDCP discard timer expires, or the DSR is not reported based on the delay being less than the first threshold, or the DSR information is not reported based on the duration of the PDCP packet loss timer.

[**0306]** In one embodiment, when the UE performs the first behavior, the UE may further specifically perform the following operation.

[**0307]** For an object whose importance is lower than a preset threshold, or an unimportant object, or an object with a low priority, the DSR information is not triggered. Alternatively, for an object whose the degree of importance is lower than a preset threshold, or an unimportant object, or an object with the low priority, the DSR information is not reported. The object includes any one of a PDU, a PDU set, an LCG, or an LCH.

[**0308]** Alternatively, in the packet loss processing for the PDU set in the first behavior, in a case that a PDCP discard timer of a first object expires, or for the first object corresponding to the expiry of the PDCP discard timer in the first behavior, the DSR is not triggered, the DSR is not reported, or data volume information corresponding to the object is not calculated into a data volume to be transmitted. The first object is any one of a PDU, a PDU set, an LCG, or an LCH.

[**0309]** Alternatively, for an object with a low priority in the first behavior or for an unimportant object in the first action, in a case that a PDCP discard timer expires, the DSR is not triggered, the DSR is not reported, or data volume information corresponding to the object is not calculated into a data volume to be transmitted. Alternatively, if the packet loss processing for the PSI is enabled, for the object with the low priority or for the unimportant object, in the case that the PDCP discard timer expires, the DSR is not triggered, the DSR is not reported, or data volume information corresponding to the object is not calculated into the data volume to be transmitted. The object is any one of a PDU, a PDU set, an LCG, or an LCH.

[**0310]** In any of the above embodiments, the first behavior performed by the UE in the case of congestion or receiving the first information is detailed, including some behaviors of packet loss processing and DSR processing, and on the basis of ensuring efficient data transmission, the consumption of resources is reduced, thereby achieving the effect of resource saving.

[**0311]** In one embodiment, the first information in the embodiment of FIG. 3 includes RRC configuration information and/or congestion indication information or indication information used by the PSI-discard.

[**0312]** Further, the first information is used to indicate any one piece of the following information: enabling packet loss processing for the PDU set; enabling packet loss processing for PSI; indicating processing for congestion; indicating use of the specific packet loss timer or the timer duration; packet loss timer information indicated by the network; threshold information indicated by the network; the judgment threshold for the important or unimportant PDU set indicated by the network; or deactivating configured DRS reporting function, or stopping unconfigured DSR reporting function, or deconfiguring the DRS reporting function, or stopping the DRS reporting function.

[**0313]** Further, the first information is used to indicate any one piece of the following information: information of the UE; information of a MAC entity; information of all DRBs; information of multiple specific DRBs; or information of a specific DRB.

[**0314]** Alternatively, the first information may be used to indicate different objects.

[**0315]** Alternatively, the first information is used to indicate information of the UE or a behavior of the UE.

[**0316]** The behavior of the UE includes any one of following: a behavior of the UE; behaviors of all DRB or MAC entities of the UE; an operation to be performed by the UE; or operations to be performed by all the DRBs or MAC entities.

[**0317]** Alternatively, the first information is used to indicate the information of the MAC entity or a behavior of the UE.

[**0318]** The behavior of the UE includes any one of following: a behavior of the MAC entity; behaviors of all DRB entities of the MAC entity; an operation to be performed by the MAC entity; or operations to be performed by all DRB entities of the MAC entity.

[**0319]** Further, the first information includes an identifier of the MAC entity.

[**0320]** The MAC entity is a MAC entity corresponding to a carrier on which the first information is received; or the MAC entity is a MAC entity corresponding to a base station device that sends or generates the first information.

[**0321]** Alternatively, the first information is used to indicate information of a DRB or a behavior of the UE.

[**0322]** Further, the first information is used to indicate information of one DRB, or information of specific DRB(s), or information of all DRBs, or information of each DRB.

[**0323]** Further, the first information is used to indicate a behavior of the UE for one DRB, or a behavior of the UE for the specific DRB(s), or a behavior of the UE for all DRBs, or a behavior of the UE for each DRB.

[**0324]** Further, the first information includes an identifier of the DRB, and/or a parameter for the DRB, and/or a behavior for the DRB.

[**0325]** Alternatively, the first information is indicated for per DRB, or for per UE, or for per MAC entity. Alternatively, the first information is common to all DRBs, or is indicated separately for DRBs, or is common to specific DRB(s).

[**0326]** In one embodiment, the method for delay information processing of FIG. 3 further includes any one of the following.

[**0327]** Multiple DRBs correspond to one piece of first information. The first information instructs the UE to perform an operation corresponding to the first information for the multiple DRBs. Each DRB corresponds to one piece of first information. The first information indicates performing an operation corresponding to the respective first information for each DRB.

[**0328]** Alternatively, the first information is used to indicate information of all DRBs, or the first information is used to indicate a behavior of the UE corresponding to all the DRBs.

[**0329]** Further, the first information carries identifiers of the DRBs, or the first information carries bitmap information of the DRBs. Multiple or all of the DRBs are arranged in ascending or descending order in the bitmap.

[**0330]** Further, the first information is information for DRBs, and a position of each piece of information corresponds to a position or ranking of a DRB corresponding to each piece of information.

[**0331]** For the first information and the DSR information described in any of the embodiments, alternatively, the indication object of the first information and the indication object of the DSR information are the same as or different.

[**0332]** For the first information in any one of the embodiments, the first information is used to indicate an LCG or an LCH performing a DSR operation. Alternatively, the first information is used to indicate whether the DSR operation is for the UE.

[**0333]** For the first information in any one of the embodiments, the first information is carried in RRC or PDCP signaling or MAC CE or DCI.

[**0334]** For the first information in any one of the embodiments, the first information is carried in RRC or PDCP signaling or MAC CE or DCI.

[**0335]** The method for delay information processing in a congestion situation according to any one of the above embodiments is illustratively described.

[**0336]** In the case of congestion, or in the case of receiving the first information, the UE cancels the triggered DSR, and/or stops all timers corresponding to the DSR, and/or deactivates/disables the DSR reporting/reporting function, and/or clears all DS or DSR information.

[**0337]** Alternatively, in the case of congestion or in the case of receiving the first information, the UE cancels the triggered DSR, and/or stops all timers corresponding to the DSR, and/or deactivates/disables the DSR reporting/reporting function, and/or clears all DS or DSR information. The DSR information is for an unimportant PDU set or an LCG or an LCH. Whether it is important is determined by the UE itself, or based on a threshold (for example, pre-configured, given in the RRC, or in the first information) given by the network, or based on an identifier (for example, pre-configured, given in the RRC, or in the first information) of the LCG/LCH given by the network

[**0338]** Alternatively, in the case of congestion or in the case of receiving the first information, the UE sets the reporting priority of the MAC CE corresponding to the DSR to be lower than or priority of the data or the lowest in the LCP procedure. Alternatively, in the LCP procedure, the UE sets the reporting priority of the MAC CE corresponding to the DSR of the specific PDU/PDU set/LCG/LCH to be lower than the priority of the data or the lowest. Alternatively, in the case of congestion, or in the case of receiving the first information, the UE includes the DSR triggering, but does not report the DSR. Alternatively, the UE does not trigger or report the DSR. Alternatively, the UE does not trigger DSR or report DSR based on the duration of the PDCP discard timer. Alternatively, the UE does not trigger the DSR or does not report the DSR for the PDU/PDU set/LCG/LCG that is considered to be unimportant by the UE.

[**0339]** The first information in the above example is congestion indication information or indication information used by PSI-discard (for example, including at least one of following: enabling a discard for PSI, indicating congestion, indicating use of a specific discard timer or timer duration, discard timer information indicated by the network, indicated threshold information, indicating the judgment threshold for the important or unimportant PDU set, deactivating/disabling /deconfiguring/suspend DSR).

[**0340]** Alternatively, the first information may indication information of the UE, information of multiple user plane bearers (Data Radio Bearers, DRBs) associated with the MAC entity, information of all DRBs, information of several specific DRBs or one specific DRB, or information of one DRB (i.e., its indicator object).

[**0341]** Alternatively, the first information may indicate the behavior of the UE, which represents a behavior of the UE, or all DRB/MAC entities of the UE, or an operation to be performed.

[**0342]** For example, based on the first information, the configuration corresponding to the MAC CE including the first information may be any one of the configurations illustrated in FIG. 4, FIG. 5, FIG. 6, FIG. 7, and FIG. 8.

[**0343]** Alternatively, in the LCP procedure of the UE, the first information may indicate the behavior of the MAC entity, which represents a behavior of the MAC entity, or all DRB entities of the MAC entity, or an operation to be performed.

[**0344]** Alternatively, the MAC entity carrying the identifier of the MAC entity is considered to be the corresponding MAC entity, or the MAC entity corresponding to the carrier receiving the first execution information is considered to be the corresponding MAC entity, or the first information is transmitted or generated from which base station device (primary node or secondary node) is considered to be for which corresponding MAC entity (that is, the corresponding MCG or SCG, or the MCG-MAC entity or the SCG-MAC entity).

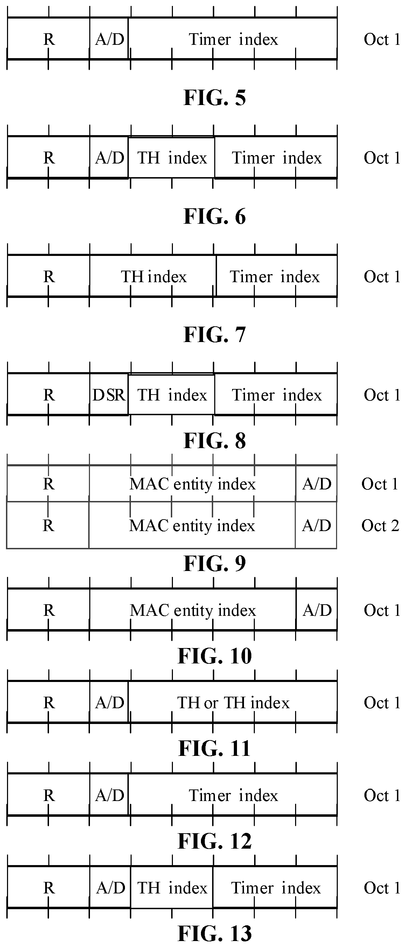

[**0345]** For example, based on the above-described first information, the configuration corresponding to the MAC CE including the first information may be any one configuration of FIG. 9, FIG. 10, FIG. 11, FIG. 12, FIG. 13, FIG. 14 and FIG.15.

[**0346]** Alternatively, the first information may indicate a behavior of the DRB entity.

[**0347]** The corresponding method 1: information of per DRB may be indicated or UE behavior for a certain DRB may be indicated. Alternatively, the DRB identifier may be carried. Alternatively, the first information is given for the DRB, or the UE is instructed to perform an operation corresponding to the first information.

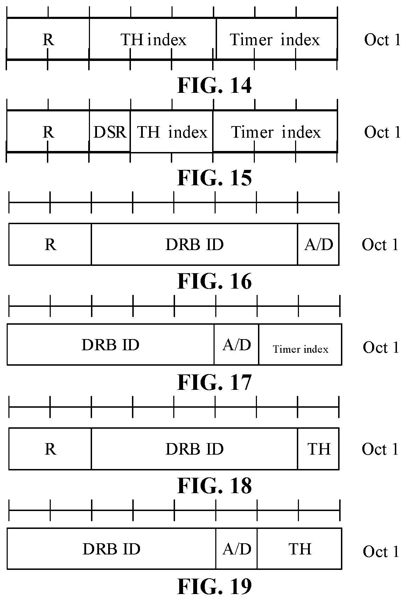

[**0348]** For example, based on the above-described first information, the configuration corresponding to the MAC CE including the first information may be any one configuration of FIG. 16, FIG. 17, FIG. 18, FIG. 19, FIG. 20, FIG. 21 and FIG. 22.

[**0349]** Information included in the configuration described in any one of FIG. 4 to FIG. 22 described above is described as follows: For example, R: reserved bit; A/D: A represents at least one of the following: using PSI-based discard, using a specific timer, suspend DSR operation. D represents at least one of following: not using PSI-based discard or using PDU set-based discard, not using a specific timer or using an existing PDCP discard timer (or timer duration), not suspending or resuming DSR operation. For example, DSR filed: l represents suspending DSR operation, 0 represents no suspending or resuming DSR operation. Alternatively, 0 represents suspending DSR operation, 1 represents not suspending or resuming DSR operation. For example, the timer index indicates which PDCP discard timer (or timer duration) is used when multiple PDCP discard timers (or timer durations) are configured or preconfigured. For example. TH: represents the threshold used to determine an unimportant packet, and/or, using the PSI-based discard. For example, TH may be preconfigured, configured by RRC, or may be determined by the UE itself. For example, TH may be configured or preconfigured multiple values, then TH index represents which value is used. For example, a TH of 1 represents that a PSI-based discard is used and/or an unimportant packet is determined based on a threshold, and a TH of 0 represents that a PSI-based discard is not used and/or an unimportant packet is not determined based on a threshold. For example, a TH of 0 represents that a PSI-based discard is used and/or an unimportant packet is determined based on a threshold, and 1 represents that a PSI-based discard is not used and/or an unimportant packet is not determined based on a threshold. Alternatively, TH may sometimes be TH index.

[**0350]** Corresponding method 2: information of specific, or several DRBs, or corresponding UE behavior may be indicated. Alternatively, the DRB identifier may be carried. Alternatively, the first information is given to the several DRBs, or the UE is instructed to perform an operation corresponding to the first information for the several DRBs. Alternatively, the first information is indicated for each of the several DRBs, or the operation corresponding to the first information corresponding to the DRB is performed for each of the several DRBs. Alternatively, in the case of multiple or all DRBs, the number of DRBs may be variable or fixed. Alternatively, if it is a fixed number, it may be 8 or 16.

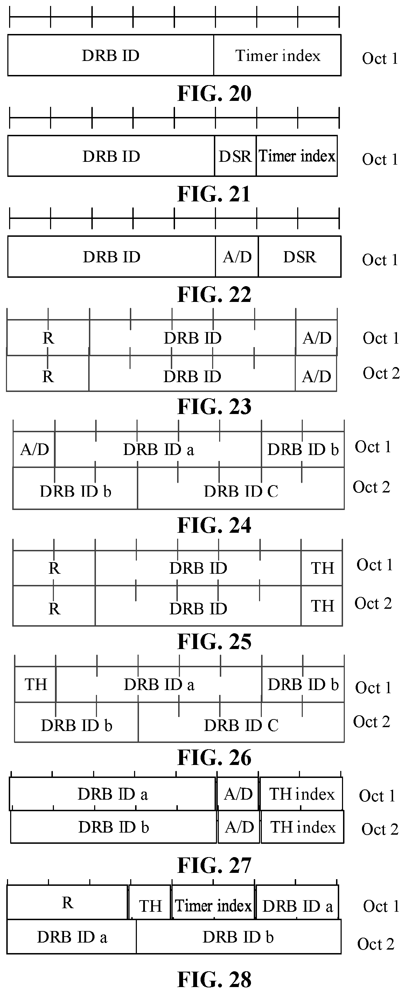

[**0351]** For example, based on the first information, the configuration corresponding to the MAC CE including the first information may be any one configuration illustrated in FIG. 23, FIG. 24, FIG. 25, FIG. 26, FIG. 27, FIG. 28, FIG. 29, FIG. 30, FIG. 31, FIG. 32, FIG. 33, FIG. 34, and FIG. 35.

[**0352]** The information included in the configuration described in any one of FIG. 23 to FIG. 35 above is described as follows: for example, A/D: A represents at least one of the following: using a PSI-based discard, using a specific timer, suspend DSR operation. D represents at least one of following: not using PSI-based discard or using PDU set-based discard, not using a specific timer or using an existing PDCP discard timer (or timer duration), not suspending or resuming DSR operation. For example, DSR filed: 1 represents suspending DSR operation. 0 represents no suspending or resuming DSR operation. Alternatively, 0 represents suspending DSR operation. 1 represents not suspending or resuming DSR operation. For example, the timer index indicates which PDCP discard timer (or timer duration) is used when multiple PDCP discard timers (or timer durations) are configured or preconfigured. For example. TH: represents the threshold used to determine an unimportant packet, and/or, using the PSI-based discard. For example, TH may be preconfigured, configured by RRC, or may be determined by the UE itself. For example, TH may be configured or preconfigured multiple values, then TH index represents which value is used. For example, a TH of 1 represents that a PSI-based discard is used and/or an unimportant packet is determined based on a threshold, and a TH of 0 represents that a PSI-based discard is not used and/or an unimportant packet is not determined based on a threshold. For example, a TH of 0 represents that a PSI-based discard is used and/or an unimportant packet is determined based on a threshold, and 1 represents that a PSI-based discard is not used and/or an unimportant packet is not determined based on a threshold. Alternatively, TH may sometimes be TH index

[**0353]** The corresponding method 3: information of all DRBs or corresponding UE behavior may be indicated. Alternatively, a DRB identifier may be carried (For example, a DRB identifier may be given. Accordingly, the UE performs an operation corresponding to the first information for the DRB indicating the DRB identifier. For another example, the DRB identifier is given, and an operation corresponding to the first information is performed for the first information of the DRB/the DRB identifier. As another example, the DRB identifier is given, the operation of the first information is performed for all indicated DRB identifiers for this MAC CE), or bitmap information of the DRB identifier (for example, Di represents DRB i, and the corresponding bit of Di represents the first information for DRB i, for example, activating or having a PSI-based discard, or using a specific timer duration, and/or deactivating/suspending the DSR corresponding to DRB i. Alternatively, when the content of the first information is one content, the MAC CE may occupy 1 OCT, otherwise, it may occupy more than one OCT).

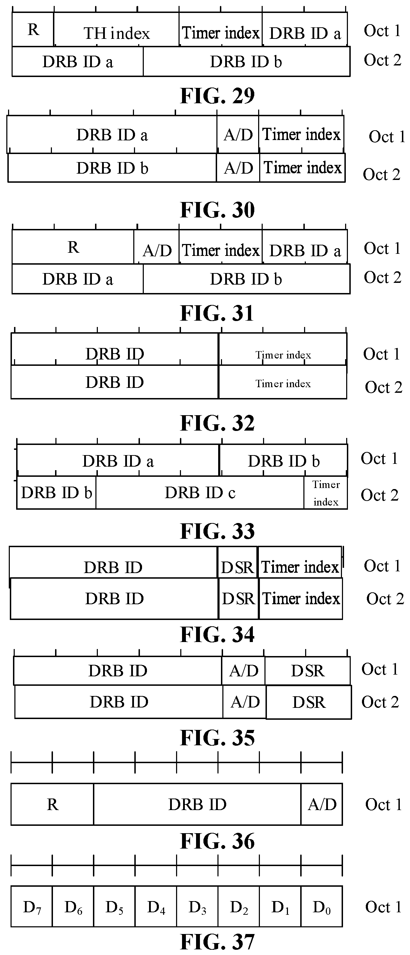

[**0354]** For example, based on the first information, the configuration corresponding to the MAC CE including the first information may be any one configuration of FIG. 36, FIG. 37, and FIG. 38. The description of information included in the configuration in any one of FIG. 36 to FIG. 38 may be found in the above description.

[**0355]** The corresponding method 4: information of all DRBs or corresponding UE behaviors may be indicated. Alternatively, the information or behaviors are given in ascending or descending order of the DRBs (for example, the DRB is the DRB corresponding to the MAC entity, or the DRBs are all the DRBs corresponding to the UE, which may be in the order of MN or SN first, or in the order of SN first and then MN. Alternatively, the MAC CE occupies 1 OCT, or may occupy more than one OCT).

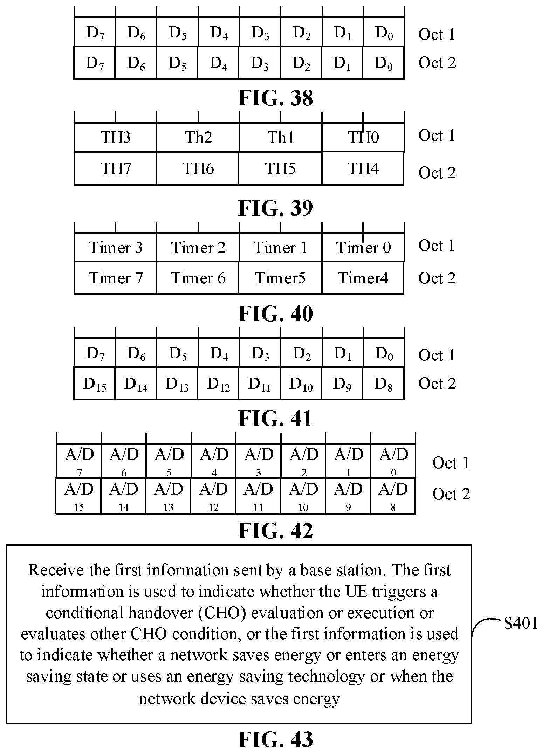

[**0356]** For example, based on the above-described first information, the configuration corresponding to the MAC CE including the first information may be any one configuration in FIG. 39 to FIG. 42. The description of information included in the configuration in any one of FIG. 39 to FIG. 42 may be found in the above description.

[**0357]** Alternatively, the instruction objects of the first information and the DSR information may be the same or different.

[**0358]** Alternatively, if DSR is involved, the first information may further indicate the operation for the DSR is for which LCG(s) or LCH(s), or whether it is for the UE.

[**0359]** Alternatively, the first information may be a MAC CE (for example, a new MAC CE, for example, using an eLHID, etc.). It may also be DCI information.

[**0360]** Alternatively, the number of DSBs indicated by the first information in any one of the above embodiments is 8 or 16.

[**0361]** The method described above is illustratively described below.

[**0362]** If the UE configures DSR reporting for LCG1 and LCG2, and if the first information is received, the UE enables the PDU setimportance (PSI)-based discard, the triggered DSR is cancelled for LCG1/2, and related functions or operations such as DSR triggering/reporting are stopped.

[**0363]** If the UE configures DSR reporting for LCG1 and LCG2, and the first information is received, and the first information indicates that DSR is stopped for LCG 1 (or there is DSR processing change for LCG 1), the UE enables a PDU setimportance (PSI)-based discard, the triggered DSR is cancelled for LCG 1, and related functions or operations such as DSR triggering/reporting are stopped.

[**0364]** Any of the above embodiments provides DSR processing in the case of congestion, and any of the embodiments may be used in combination with other embodiments or may be used alone.

[**0365]** Alternatively, the UE performing the packet loss processing or the packet loss processing for the PDU set in the first behavior includes: a PDCP layer indicating M-th information to a lower layer. The lower layer includes an RLC and/or the MAC layer, and the M-th information is used to indicate which PDU(s) or PDU set(s) or data volume(s) to be transmitted corresponding to data packets is used for DSR reporting, or is used to be carried in a MAC CE including the DSR, or which PDU(s) or PDU set(s) or data volume(s) to be transmitted corresponding to data packets is data volume(s) to be transmitted corresponding to the DSR, or which PDU(s) or PDU set(s) or data packet(s) correspond to a PDCP discard timer that expires or does not run, or indicate that data volume(s) corresponding to the PDU(s) or PDU set(s) or data packet(s) corresponding to the PDCP discard timer that expires or does not run is not taken as data volume(s) used for Buffer Status Report (BSR) or DSR statistics or reportingis used to be carried in a MAC CE including the DSR, or which PDU(s) or PDU set(s) or data volume(s) to be transmitted corresponding to data packets is data volume(s) to be transmitted corresponding to the DSR, or which PDU(s) or PDU set(s) or data packet(s) correspond to a PDCP discard timer that expires or does not run, or indicate that data volume(s) corresponding to the PDU(s) or PDU set(s) or data packet(s) corresponding to the PDCP discard timer that expires or does not run is not taken as data volume(s) used for Buffer Status Report (BSR) or DSR statistics or reporting.

[**0366]** In the present embodiment, specifically, the packet loss processing or the packet loss processing for the PDU set includes: the PDCP layer indicating M-th information to a lower layer. The lower layer includes an RLC layer and/or a MAC layer, and the M-th information is used to indicate which PDU(s) or PDU set(s) or data volume(s) to be transmitted corresponding to data packets is used for DSR reporting; or which PDU(s) or PDU set(s) or data volume(s) to be transmitted corresponding to data packets is used to be carried in a MAC CE including the DSR, or which PDU(s) or PDU set(s) or data volume(s) to be transmitted corresponding to data packets is data volume(s) to be transmitted corresponding to the DSR, or which PDU(s) or PDU set(s) or data packet(s) correspond to a PDCP discard timer that expires or does not run, or indicate that the PDU(s) or PDU set(s) or data volume(s) corresponding to data packet(s) corresponding to the PDCP discard timer that expires or does not run is not taken as data volume(s) used for BSR or DSR statistics or reporting.

[**0367]** Alternatively, the UE performing the packet loss processing or the packet loss processing for the PDU set in the first behavior includes: the PDCP layer determines which PDU(s) or PDU set(s) or the data volume(s) to be transmitted corresponding to data packets is used for DSR reporting, or is used carried in the MAC CE including the DSR, or is data volume(s) to be transmitted corresponding to the DSR, or which PDU(s) or PDU set(s) or data packet(s) correspond to a PDCP discard timer that expires or does not run, or indicates that the PDU(s) or PDU set(s) or data volume(s) corresponding to data packet(s) corresponding to the PDCP discard timer that expires or does not run is not taken as data volume(s) used for Buffer Status Report (BSR) or DSR statistics or reporting. Alternatively, the PDCP layer determines the PDU(s) or PDU set(s) or data packet(s) based on importance, priority, etc.

[**0368]** In the present embodiment, specifically, the packet loss processing for the PDU set includes: packet loss processing for the PDU or the packet loss processing for the PDU set, the PDCP layer determines which PDU(s) or PDU set(s) or data packet(s) correspond to data volumes to be transmitted is used for DSR reporting, or is used to be carried in the MAC CE including the DSR, or is data volume(s) to be transmitted corresponding to the DSR, or which PDU(s) or PDU set(s) or data packet(s) correspond to a PDCP discard timer that expires or does not run, or indicates that the PDU(s) or PDU set(s) or data volume(s) corresponding to data packet(s) corresponding to the PDCP discard timer that expires or does not run is not taken as data volume(s) used for Buffer Status Report (BSR) or DSR statistics or reporting. Alternatively, the PDCP layer determines the PDU(s) or PDU set(s) or data packet(s) based on importance, priority, etc.

[**0369]** Alternatively, the UE performs the operation of determining or identifying being important or unimportant, or priority or non-priority in the first behavior includes: in a case that packet loss processing is configured or packet loss processing is based on the PDU set, and/or when the first information is received, the UE determines or identifies whether the data packet or the PDU or the PDU set is important or unimportant, or has priority or non-priority.

[**0370]** In the present embodiment, specifically, in a case that packet loss processing or packet loss processing based on the PDU set is configured, and/or when the first information is received, the UE determines or identifies whether the data packet(s) or the PDU(s) or the PDU set(s) is important or unimportant, or has priority or non-priority. For example, if the transmitting PDCP entity is configured with psi-BasedDiscard and the discardTimerXR is activated, at reception of a PDCP SDU from upper layers, the transmitting PDCP entity shall identify which the PDU set is high importance PDU set or lower importance PDU set.

[**0371]** Any of the above embodiments provides DSR processing in the case of congestion, and any of the above embodiments may be used in combination with other embodiments or may be used alone.

[**0372]** In one embodiment, as illustrated in FIG. 43, an information triggering method is provided, that is, a processing method under congestion control is further provided, and the application of the method to the UE side in FIG. 1 is described as an example, and includes the following operation.

[**0373]** In operation S401, the first information sent by a base station is received. The first information is used to indicate whether UE triggers a Conditional Handover (CHO) evaluation or execution or evaluates other CHO condition, or the first information is used to indicate whether a network saves energy or enters an energy saving state or uses an energy saving technology or when the network device saves energy.

[**0374]** In the embodiments of the present disclosure, when the network-side device informs the UE of cell energy saving, the UE may receive the first information sent by the network-side device, and may further determine whether to trigger CHO evaluation or execution based on the first information. Alternatively, whether the network saves energy or enters an energy saving state or uses an energy saving technology or when the network saves energy is further determined.

[**0375]** In the CHO triggering method according to the embodiments of the present disclosure, cell switching may be performed according to the indication of the first information to achieve fast cell switching under the condition of cell energy saving, and a new implementation condition for triggering CHO is provided.

[**0376]** Alternatively, the network is a source base station and/or a target base station.

[**0377]** Alternatively, the first information in the above embodiment is used to instruct the UE to trigger CHO evaluation or execution or evaluate other CHO condition, or to trigger the UE to evaluate or execute the CHO or evaluate other CHO condition, or to instruct the UE to trigger CHO evaluation or execution corresponding to network energy saving or evaluate the other CHO condition, or to instruct the UE to perform the CHO evaluation or execution or evaluate other CHO condition in an indicated cell, or to instruct the UE to perform the CHO evaluation or execution or evaluate the other CHO condition in a cell, in which energy is saved, in the energy saving state, or in which the energy saving technology is used, or to instruct the UE to perform the CHO evaluation or execution or evaluate the other CHO condition in a network, in which energy is saved, in the energy saving state, or in which the energy saving technology is used.

[**0378]** Alternatively, the first information is carried in the downlink control signaling (DCI); and/or a first information cell identifier or a cell bitmap. Alternatively, the first information is indication information for per Cell, indication information for per UE, indication information for per group, indication information for a specific cell, or indication information for a Pcell and/or a PSCEll.

[**0379]** Further, the DCI is any one of following: newly defined DCI or a newly defined DCI format corresponding to the newly defined DCI; an existing DCI or an existing DCI format corresponding to the existing DCI; DCI for activating cell discontinuous transmission or discontinuous reception; DCI for deactivating cell discontinuous transmission or discontinuous reception; DCI format 2_X; the DCI corresponding to a specific RNTI; or the DCI corresponding to a specific search space.

[**0380]** Alternatively, the first information is located in a reserved bit in the DCI, or the first information multiplexes an existing bit in the DCI, or the reserved bit in the DCI is used to represent the first information; or the existing bit in the DCI is multiplexed to represent the first information.

[**0381]** Alternatively, the first information is used to indicate any one of following: the first information is used to indicate whether the UE triggers the CHO evaluation or execution or evaluates the other CHO condition; the first information is to indicate whether the UE believes whether the network saves energy or enters the energy saving state or uses the energy saving technology or when the network device saves energy; the first information is used to indicate whether the UE that receives DCI information triggers the CHO evaluation or execution or evaluates the other CHO condition; the first information is used to indicate whether the UE that receives the DCI information believes whether the network saves energy or enters the energy saving state or uses the energy saving technology or when the network device saves energy; the first information is used to indicate whether the network saves energy or enters the energy saving state or uses the energy saving technology or when the network device saves energy; the first information is used to indicate whether one or more specific cells save energy or enter the energy saving state or use the energy saving technology or when the one or more specific cells save energy; the first information is used to indicate whether one or more cells save energy or enter the energy saving state or use the energy saving technology or when the one or more cells save energy; the first information is used to indicate whether the UE believes that the network saves energy or enters the energy saving state or uses the energy saving technology or when the network device saves energy; the first information is used to indicate whether the UE believes whether the one or more specific cells save energy or enter the energy saving state or use the energy saving technology or when the one or more specific cells save energy; the first information is used to indicate whether the UE believes whether one or more cells save energy or enter the energy saving state or use the energy saving technology or when the one or more cells save energy; the first information is used to indicate whether the UE that receives the DCI information believes whether the network saves energy or enters the energy saving state or uses the energy saving technology or when the network device saves energy; the first information is used to indicate whether the UE that receives the DCI information believes whether one or more specific cells save energy or enter the energy saving state or use the energy saving technology or when the one or more specific cells save energy; the first information is used to indicate whether the UE that receives the DCI information believes whether one or more cells save energy or enter the energy saving state or use the energy saving technology or when the one or more cells save energy; the first information is used to indicate whether the UE triggers the CHO evaluation or execution or evaluates the other CHO condition; the first information is used to indicate whether the UE that receives the DCI information triggers the CHO evaluation or execution or evaluates the other CHO condition; the first information is used to indicate whether the UE triggers the CHO evaluation or execution or evaluates the other CHO condition at the network; the first information is used to indicate whether the UE that receives the DCI information triggers the CHO evaluation or execution or evaluates the other CHO condition at the network; the first information is used to indicate whether the UE triggers the CHO evaluation or execution or evaluates the other CHO condition in an indicated cell; the first information is used to indicate whether the UE that receives the DCI information triggers the CHO evaluation or execution in an indicated cell; the first information is used to indicate whether each cell of the UE triggers the CHO evaluation or execution or evaluates the other CHO condition; the first information is used to indicate whether each cell of the UE that receives the DCI information triggers the CHO evaluation or execution or evaluates the other CHO condition; the first information is used to indicate whether the UE triggers the CHO evaluation or execution or evaluates the other CHO condition in a primary cell and/or a secondary cell; the first information is used to indicate whether the UE that receives the DCI information triggers the CHO evaluation or execution or evaluates the other CHO condition in the primary cell and/or the secondary cell; the first information is used to indicate whether a specific cell of the UE triggers the CHO evaluation or execution or evaluates the other CHO condition; or the first information is used to indicate whether a specific cell of the UE that receives the DCI information triggers the CHO evaluation or execution or evaluates the other CHO condition.

[**0382]** Alternatively, the method further includes at least one of: the first indication information is used for instructing the UE to perform measurement and/or CHO evaluation; the first indication information is used for instructing the UE that receives DCI information to perform measurement and/or the CHO evaluation; the first indication information is used to instruct the UE to perform measurement and/or the CHO evaluation in specific cell(s) or one cell or a certain cell or each cell or an indicated cell; the first indication information is used to instruct the UE that receives the DCI information to perform measurement and/or the CHO evaluation in specific cell(s) or one cell or a certain cell or each cell or an indicated cell; the first indication information is used to instruct the UE to evaluate other CHO conditions, or simultaneously evaluate other CHO conditions; the first indication information is used to instruct the UE to determine whether to perform CHO based on a plurality of CHO evaluation conditions; the first indication information is used to indicate that the UE can perform CHO only when at least one of CHO execution conditions of A3, A4, and A5 are satisfied simultaneously in a case that the network saves energy or in a condition that the network saves energy; measuring a cell of the UE, and/or obtaining a measurement result; determining, for the cell of the UE, according to the measurement result, whether to perform CHO, or whether a CHO execution cell is satisfied, or whether at least one of CHO execution conditions of A3, A4, and A5 is satisfied; in a case that the measurement result satisfies a preset condition, if the first information indicates or triggers network energy saving , the UE performs CHO; or in a case that the measurement result satisfies the preset condition, triggering, according to the first information, a CHO evaluation or execution or evaluating other CHO condition corresponding to the network energy saving

[**0383]** Alternatively, the first information is carried in the MAC CE.

[**0384]** Alternatively, the MAC CE is any one of following: a dedicated MAC CE of the UE; a common MAC CE of all UEs; a MAC CE for all UE groups; a MAC CE for all cells; or a specific MAC CE, or a new MAC CE corresponding to the CHO execution.

[**0385]** Further, the UE may identify the MAC CE by using a first Logical Channel Identifier (LCID) or an Extended LCID (eLCID) identifier; or the UE determines whether a MAC CE is the MAC CE by using the first LCID or eLCID identifier; or the MAC CE corresponds to a first logical channel identifier LCID or e-LCID; the LCID or 3-LCID is used to determine a role of the MAC CE, or to indicate a function of the MAC CE, or to distinguish the MAC CE from other MAC CEs.

[**0386]** Alternatively, the first information is used to indicate any one of following: the first information is used to indicate whether the UE triggers the CHO evaluation or execution or evaluates the other CHO condition; the first information is to indicate whether the UE believes whether the network saves energy or enters the energy saving state or uses the energy saving technology or when the network device saves energy; the first information is used to indicate whether the UE that receives DCI information triggers the CHO evaluation or execution or evaluates the other CHO condition; the first information is used to indicate whether the UE that receives the DCI information believes whether the network saves energy or enters the energy saving state or uses the energy saving technology or when the network device saves energy; the first information is used to indicate whether the network saves energy or enters the energy saving state or uses the energy saving technology or when the network device saves energy; the first information is used to indicate whether one or more specific cells save energy or enter the energy saving state or use the energy saving technology or when the one or more specific cells save energy; the first information is used to indicate whether one or more cells save energy or enter the energy saving state or use the energy saving technology or when the one or more cells save energy; the first information is used to indicate whether the UE believes that the network saves energy or enters the energy saving state or uses the energy saving technology or when the network device saves energy; the first information is used to indicate whether the UE believes whether the one or more specific cells save energy or enter the energy saving state or use the energy saving technology or when the one or more specific cells save energy; the first information is used to indicate whether the UE believes whether one or more cells save energy or enter the energy saving state or use the energy saving technology or when the one or more cells save energy; the first information is used to indicate whether the UE that receives the DCI information believes whether the network saves energy or enters the energy saving state or uses the energy saving technology or when the network device saves energy; the first information is used to indicate whether the UE that receives the DCI information believes whether one or more specific cells save energy or enter the energy saving state or use the energy saving technology or when the one or more specific cells save energy; the first information is used to indicate whether the UE that receives the DCI information believes whether one or more cells save energy or enter the energy saving state or use the energy saving technology or when the one or more cells save energy; the first information is used to indicate whether the UE triggers the CHO evaluation or execution or evaluates the other CHO condition; the first information is used to indicate whether the UE that receives the DCI information triggers the CHO evaluation or execution or evaluates the other CHO condition; the first information is used to indicate whether the UE triggers the CHO evaluation or execution or evaluates the other CHO condition at the network; the first information is used to indicate whether the UE that receives the DCI information triggers the CHO evaluation or execution or evaluates the other CHO condition at the network; the first information is used to indicate whether the UE triggers the CHO evaluation or execution or evaluates the other CHO condition in an indicated cell; the first information is used to indicate whether the UE that receives the DCI information triggers the CHO evaluation or execution or evaluates other CHO condition in an indicated cell; the first information is used to indicate whether each cell of the UE triggers the CHO evaluation or execution or evaluates the other CHO condition; the first information is used to indicate whether each cell of the UE that receives the DCI information triggers the CHO evaluation or execution or evaluates the other CHO condition; the first information is used to indicate whether the UE triggers the CHO evaluation or execution or evaluates the other CHO condition in a primary cell and/or a secondary cell; the first information is used to indicate whether the UE that receives the DCI information triggers the CHO evaluation or execution or evaluates the other CHO condition in the primary cell and/or the secondary cell; the first information is used to indicate whether a specific cell of the UE triggers the CHO evaluation or execution or evaluates the other CHO condition; the first information is used to indicate whether a specific cell of the UE that receives the DCI information triggers the CHO evaluation or execution or evaluates the other CHO condition; the first information is used to indicate whether a cell triggers the CHO evaluation or execution or evaluates other CHO condition; the first information is used to indicate whether each cell triggers the CHO evaluation or execution or evaluates other CHO condition; the first information is used to indicate whether a specific cell triggers the CHO evaluation or execution or evaluates other CHO condition; the first information is used to indicate whether a Pcell and/or PSCell triggers the CHO evaluation or execution or evaluates other CHO condition; the first information is to indicate whether a MAC entity triggers the CHO evaluation or execution or evaluates other CHO condition; or the first information is used to indicate whether the UE triggers the CHO evaluation or execution or evaluates other CHO condition.

[**0387]** Alternatively, the first information being used for indicating whether the MAC entity triggers the CHO execution includes at least one of the following:

[**0388]** The first information is used to indicate whether all serving cells corresponding to the MAC entity of the UE evaluate or perform CHO or evaluate other CHO condition, or whether all serving cells corresponding to the MAC entity of the UE trigger the CHO evaluation or execution or evaluate other CHO condition.

[**0389]** Alternatively, the first information being used to indicate whether an indicated cell corresponding to the MAC entity of the UE evaluates or performs CHO or evaluates other CHO condition, or whether the indicated cell corresponding to the MAC entity of the UE triggers CHO evaluation or execution or evaluates other CHO condition.

[**0390]** Alternatively, the first information is used to indicate whether a primary cell or a secondary cell corresponding to the MAC entity evaluates or performs CHO or evaluates other CHO condition, or whether the primary cell or the secondary cell corresponding to the MAC entity triggers CHO evaluation or execution or evaluates other CHO condition.

[**0391]** Alternatively, the first information is used to indicate whether the MAC entity that receives the MAC CE information evaluates or performs CHO or evaluates other CHO condition, or whether the MAC entity that receives the MAC CE information triggers the CHO evaluation or execution or evaluates other CHO conditions.

[**0392]** Alternatively, the first information is used to indicate whether a specific cell corresponding to the MAC entity that receives the MAC CE information evaluates or performs CHO or evaluates other CHO condition, or whether the specific cell corresponding to the MAC entity that receives the MAC CE information triggers CHO evaluation or execution or evaluates other CHO condition.

[**0393]** Alternatively, the first information is used to indicate whether a specific cell corresponding to the MAC entity that receives the MAC CE information evaluates or performs CHO or evaluates other CHO condition, or whether the specific cell corresponding to the MAC entity that receives the MAC CE information triggers CHO evaluation or execution or evaluates other CHO condition.

[**0394]** Alternatively, the first information includes a cell bit map, bits of the cell bit map correspond to different cells, and/or different bit positions in the cell bit map indicate whether corresponding cells save energy or trigger CHO execution, and/or the different bit positions in the cell bit map indicate whether the corresponding cells save energy or enter energy saving or use the energy saving technology or whether perform CHO or evaluate CHO or evaluate other CHO condition.

[**0395]** Alternatively, the first information includes cell indexes or cell identifiers; the cell indexes or cell identifiers are used to indicate corresponding cell information, and/or to indicate whether the corresponding cell saves energy or enters energy saving or uses the energy saving technology, and/or to indicate that CHO execution is triggered in the cell.

[**0396]** The description of A3, A4, and A5 in the above embodiments is as follows.

[**0397]** As agreed before, Event A3, A4 and/or A5 can be configured as a CHO execution condition for NES. The NES-specific configuration of Event A3/4/5 would be the relaxed conditions to suit the NES scenario/requirement, thus, when the UE considerers which a candidate target cell is a triggered cell, the UE should consider both execution conditions together, i.e. the UE executes the CHO only if the source cell enters the NES and if any candidate target cell fulfils the NES-specific Event A3/4/5.

[**0398]** Proposal 1: The UE considered a candidate target cell as a triggered cell if the source cell enters the NES and if this candidate target cell fulfils the NES-specific Event A3/4/5.

[**0399]** Before the source cell enters the NES, the UE may move out of the boundary of the source cell. If that is the case, the network needs to also configure the legacy CHO execution conditions to keep the UE connected and guarantee the UE's performance. Once the legacy CHO execution event is fulfilled, the UE executes the legacy CHO no matter if the source cell enters the NES or not.

[**0400]** Proposal 2: If both the legacy and NES-specific CHO execution conditions are configured and if the legacy CHO execution event is fulfilled, the UE should execute the legacy CHO.

[**0401]** The method described above is illustratively described below.

[**0402]** In the first method, common DCI is used to indicate the triggering of CHO execution corresponding to network energy saving (NES), or to indicate whether the corresponding cell saves energy or enters an energy saving state.

[**0403]** Alternatively, the common DCI is newly defined DCI, or existing DCI used to activate/deactivate the cell DTX/DRX is multiplexed.

[**0404]** Alternatively, the reserved bit in the DCI or the multiplexed existing bit (for example, the existing bit indicates a different meaning in a specific case) indicates whether to trigger CHO execution.

[**0405]** Alternatively, whether to trigger CHO execution is indicated for each cell, or whether to trigger CHO execution is indicated for Pcell and/or PScell, or whether to trigger CHO execution is indicated for specific cell(s) (for example, for which cell identifier(s)).

[**0406]** Alternatively, the DCI instructs the UE to use or measure or evaluate other CHO execution conditions (such as at least one of A3/4/5) corresponding to network energy saving (NES).

[**0407]** In the second method, a MAC CE is used to indicate the triggering of CHO execution corresponding to network energy saving (NES), or to indicate whether the corresponding cell saves energy or enters an energy saving state.

[**0408]** The MAC CE is a UE-dedicated MAC CE for each UE. Alternatively, The MAC CE is a common MAC CE, and the same MAC CE is sent for all UEs.

[**0409]** Alternatively, the MAC CE is a newly introduced MAC CE for triggering of CHO execution.

[**0410]** Alternatively, the MAC CE has a new LCID identifier, such as an E-LCID. Accordingly, the UE determines a role of the MAC CE based on the LCID identifier.

[**0411]** Alternatively, the MAC CE carries indication information for indicating whether to trigger CHO execution.

[**0412]** Alternatively, the indication information may be for one cell, each cell, or specific cell(s) (for example, a cell bitmap is given, different bitmap positions indicate whether the cell corresponding to the bit triggers CHO execution, for example, cell index is given, whether CHO execution is triggered is indicated for the cell corresponding to the cell index), may be for UE (correspondingly, indicate whether all serving cells of the UE or Pcell/PScell performs CHO), or may be for MAC entity (correspondingly, indicate whether all serving cells of the MAC entity of the UE or whether Pcell/PScell corresponding to the MAC entity performs CHO).

[**0413]** The MAC CE instructs the UE to use or measure or evaluate other CHO execution condition(s) (such as at least one of A3/4/5) corresponding to network energy saving (NES).

[**0414]** The information triggering method described in any one of the above embodiments provides a CHO processing method, and any one of the above embodiments may be used in combination with other embodiments or may be used alone.

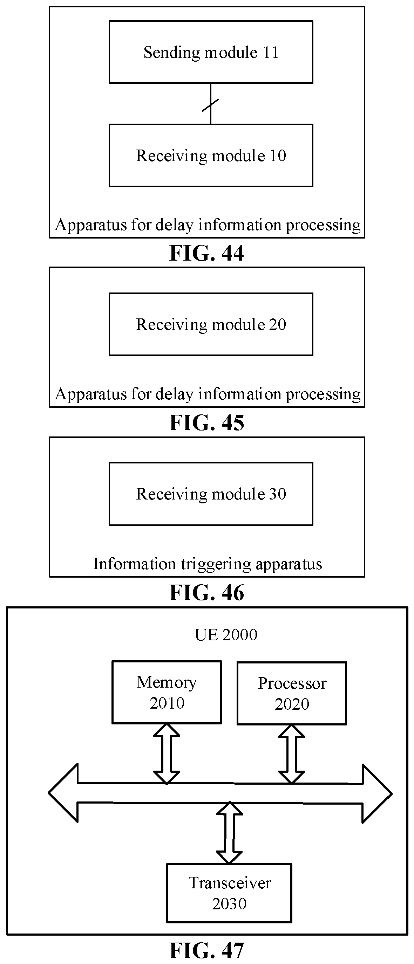

[**0415]** In one embodiment, as illustrated in FIG. 44, an apparatus for delay information processing is provided. The apparatus includes a receiving module 10 and/or a sending module 11. The receiving module 10 is configured to trigger a DSR in a case of the first condition. The sending module 11 is configured to report the DSR.

[**0416]** In one embodiment, as illustrated in FIG. 45, an apparatus for delay information processing is provided. The apparatus includes a receiving module 20. The receiving module 20 is configured to perform the first behavior in a case of congestion or receiving first information, or in a case that the first information indicates a specific content or a specific value. The first behavior includes at least one of following: enabling packet loss processing for a Packet Data Unit (PDU) set; enabling packet loss processing for PDU set importance (PSI); enabling processing for the congestion; using a specific packet loss timer or timer duration; determining an important or unimportant PDU set; determining a judgment threshold or criterion for the important or unimportant PDU set; deactivating a delay status reporting (DRS) reporting function, or a DSR mechanism; stopping a DSR reporting or triggering function, or not reporting DSR information; or deconfiguring DSR triggering or reporting.

[**0417]** In one embodiment, as illustrated in FIG. 46, an information triggering apparatus is provided. The apparatus includes a receiving module 30. The receiving module 30 is configured to receive the first information sent by a base station. The first information is used to indicate whether User Equipment (UE) triggers a Conditional Handover (CHO) evaluation or execution or evaluates other CHO condition, or the first information is used to indicate whether a network saves energy or enters an energy saving state or uses an energy saving technology or when the network device saves energy.

[**0418]** For specific limitation of the apparatus for delay information processing, the reference is made to the limitation of the method for delay information processing described above, and the description thereof will not be repeated herein. Each module in the apparatus for delay information processing described above may be completely or partially implemented by software, hardware, and combinations thereof. The above-described modules may be embedded in hardware or independent of the processor in the computer device, or may be stored in the memory in the computer device in software form, so as to facilitate the processor to call and perform the corresponding operations of the above-described modules.

[**0419]** For specific limitation of the information triggering apparatus, the reference is made to the limitation of the method for delay information processing described above, which will not be repeatedly described herein. Each module in the information triggering apparatus described above may be implemented in whole or in part by software, hardware, and combinations thereof. The above-described modules may be embedded in hardware or independent of the processor in the computer device, or may be stored in the memory in the computer device in software form, so as to facilitate the processor to call and perform the corresponding operations of the above-described modules.

[**0420]** FIG. 47 is a schematic configuration diagram of a user terminal 2000 according to an embodiment of the present disclosure. The user terminal 2000 may be a UE, and the user terminal 2000 illustrated in FIG. 47 includes a processor 2010, and the processor 2010 may call and run a computer program from a memory to implement the methods in the embodiments of the present disclosure.

[**0421]** Alternatively, as illustrated in FIG. 47, the user terminal 2000 may further include a memory 2020. The processor 2010 may call and run a computer program from the memory 2020 to implement the methods in the embodiments of the present disclosure. Here, the memory 2020 may be a separate device independent of the processor 2010 or may be integrated in the processor 2010.

[**0422]** Alternatively, as illustrated in FIG. 47, the user terminal 2000 may further include a transceiver 2030, and the processor 2010 may control the transceiver 2030 to communicate with other devices to implement the methods in the embodiments of the present disclosure, specifically, may transmit information or data to other devices or receive information or data transmitted by other devices. The transceiver 2030 may include a transmitter and a receiver. The transceiver 2030 may further include one or more antennas.

[**0423]** Alternatively, the user terminal 2000 may specifically be an access network device according to the embodiments of the present disclosure, and the user terminal 2000 may implement corresponding procedures implemented by the access network device in each method according to the embodiments of the present disclosure, which will not be repeatedly described here for the sake of simplicity.

[**0424]** Alternatively, the user terminal 2000 may specifically be the UE according to the embodiments of the present disclosure, and the user terminal 2000 may implement corresponding procedures implemented by the UE in each method according to the embodiments of the present disclosure, which will not be described herein for the sake of simplicity.

[**0425]** In one embodiment, a computer-readable storage medium having stored thereon a computer program is provided. When the computer program is executed by a processor, following operation is implemented.

[**0426]** In a case of the first condition, a DSR is triggered, and/or the DSR is reported.

[**0427]** In one embodiment, a computer-readable storage medium having stored thereon a computer program is provided. When the computer program is executed by a processor, the following operation is implemented.

[**0428]** In a case of congestion or receiving first information, or in a case that the first information indicates a specific content or a specific value, UE performs the first behavior. The first behavior includes at least one of following: initiating packet loss processing; enabling packet loss processing for a Packet Data Unit (PDU) set; enabling packet loss processing for PDU set importance (PSI); enabling processing for the congestion; using a specific packet loss timer or timer duration; determining an important or unimportant PDU set; determining a judgment threshold or criterion for the important or unimportant PDU set; deactivating a delay status reporting (DRS) reporting function, or a DSR mechanism; stopping a DSR reporting or triggering function, or not reporting DSR information; or deconfiguring DSR triggering or reporting.

[**0429]** In one embodiment, a computer-readable storage medium having stored thereon a computer program is provided. When the computer program is executed by a processor, the following operation is implemented.

[**0430]** The first information sent by a base station is received. The first information is used to indicate whether User Equipment (UE) triggers a Conditional Handover (CHO) evaluation or execution or evaluates other CHO condition, or the first information is used to indicate whether a network saves energy or enters an energy saving state or uses an energy saving technology or when the network device saves energy.

[**0431]** Embodiments of the present disclosure further provide a computer program product including instructions that, when run on a computer, cause the computer to perform the following operation.

[**0432]** In a case of the first condition, a DSR is triggered, and/or the DSR is reported.

[**0433]** Embodiments of the present disclosure further provide a computer program product including instructions that, when run on a computer, cause the computer to perform the following operation.

[**0434]** In a case of congestion or receiving first information, or in a case that the first information indicates a specific content or a specific value, UE performs the first behavior. The first behavior includes at least one of following: initiating packet loss processing; enabling packet loss processing for a Packet Data Unit (PDU) set; enabling packet loss processing for PDU set importance (PSI); enabling processing for the congestion; using a specific packet loss timer or timer duration; determining an important or unimportant PDU set; determining a judgment threshold or criterion for the important or unimportant PDU set; deactivating a delay status reporting (DRS) reporting function, or a DSR mechanism; stopping a DSR reporting or triggering function, or not reporting DSR information; or deconfiguring DSR triggering or reporting.

[**0435]** Embodiments of the present disclosure further provide a computer program product including instructions that, when run on a computer, cause the computer to perform the following operation.

[**0436]** The first information sent by a base station is received. The first information is used to indicate whether User Equipment (UE) triggers a Conditional Handover (CHO) evaluation or execution or evaluates other CHO condition, or the first information is used to indicate whether a network saves energy or enters an energy saving state or uses an energy saving technology or when the network device saves energy.

[**0437]** It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

[**0438]** It should be understood that the above memory is illustrative but not limiting, for example, the memory in the embodiments of the present disclosure may also be a SRAM, a DRAM, a SDRAM, a DDR SDRAM, an ESDRAM, a SLDRAM, a DR RAM, and the like. That is, the memory in the embodiments of the present disclosure is intended to include, but is not limited to, these and any other suitable type of memory.

[**0439]** Embodiments of the present disclosure further provide a computer-readable storage medium for storing a computer program.

[**0440]** Alternatively, the computer-readable storage medium may be applied to the access network device in the embodiments of the present disclosure, and the computer program causes the computer to perform the corresponding flow implemented by the access network device in each method in the embodiment of the present disclosure, and the description thereof will not be repeated here for the sake of brevity.

[**0441]** Alternatively, the computer-readable storage medium may be applied to the UE in the embodiments of the present disclosure, and the computer program causes the computer to execute the corresponding flow implemented by the UE in each method of the embodiment of the present disclosure, and the description thereof will not be repeated here for the sake of brevity.

[**0442]** Embodiments of the present disclosure further provide a computer program product including computer program instructions.

[**0443]** Alternatively, the computer program product may be applied to the access network device in the embodiments of the present disclosure, and the computer program instruction causes the computer to execute the corresponding flow implemented by the access network device in each method in the embodiment of the present disclosure, and the description thereof will not be repeated here for the sake of brevity.

[**0444]** Alternatively, the computer program product may be applied to the UE in the embodiments of the present disclosure, and the computer program instruction causes the computer to execute the corresponding flow implemented by the UE in each method of the embodiment of the present disclosure, and the description thereof is not repeated here for the sake of brevity.

[**0445]** Embodiments of the present disclosure further provide a computer program.

[**0446]** Alternatively, the computer program may be applied to the access network device in the embodiment of the present disclosure, and when the computer program is run on the computer, the computer performs the corresponding flow implemented by the access network device in each method of the embodiment of the present disclosure, and the description thereof is not repeated here for the sake of brevity.

[**0447]** Alternatively, the computer program may be applied to the UE in the embodiment of the present disclosure, and when the computer program is run on the computer, the computer executes the corresponding flow implemented by the UE in each method of the embodiment of the present disclosure, and the description thereof is not repeated here for the sake of brevity.

[**0448]** Those of ordinary skill in the art will appreciate that the elements and algorithmic steps of the various examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

[**0449]** Those skilled in the art can clearly understand that for convenience and conciseness of the description, the specific working processes of the systems, apparatus, and units described above may refer to the corresponding processes in the aforementioned method embodiments, which will not be repeatedly described herein.

[**0450]** In several embodiments provided herein, it should be understood that the disclosed systems, apparatuses, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

[**0451]** The units described as separate units may or may not be physically separate, and the units displayed as units may or may not be physical units, that is, they may be located in one place or may be distributed over multiple network units. Some or all of the units may be selected according to actual needs to achieve the purpose of the solution of the present embodiment.

[**0452]** In addition, each functional unit in each embodiment of the present disclosure may be integrated in one processing unit, each unit may be physically present alone, or two or more units may be integrated in one unit.

[**0453]** The functions may be stored in a computer-readable storage medium if implemented in the form of software functional units and sold or used as independent products. Based on this understanding, the technical solution of the present disclosure essentially or contributes to the prior art or a part of the technical solution may be embodied in the form of a software product stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a Read-Only Memory (ROM), a Random Access Memory (RAM), a magnetic disk, or an optical disk that can store a program code.

[**0454]** Finally, it should be noted that the above embodiments are merely used to illustrate the technical solutions of the present disclosure, and are not intended to limit them. Although the present disclosure has been described in detail with reference to the above-described embodiments, those skilled in the art should understand that the technical solutions described in the above-described embodiments may be modified, or some or all of the technical features may be equivalently replaced. However, these modifications or substitutions do not cause the essence of the corresponding technical solutions to deviate from the scope of the technical solutions of each embodiment of the present disclosure, and should be covered by the scope of the claims and the specification of the present disclosure. In particular, the technical features mentioned in the various embodiments can be combined in any manner as long as there is no structural conflict. The present disclosure is not limited to the specific embodiments disclosed herein, but includes all technical solutions falling within the scope of the claims.

## Claims

1. A method for delay information processing, comprising:
in a case of a first condition, triggering a delay status reporting (DSR) and/or reporting the DSR.

2. The method of claim 1, wherein the first condition comprises a DSR reporting period.

3. The method of claim 2, wherein the DSR reporting period is a reporting period that is set for a first object.

4. The method of claim 2 or 3, wherein the DSR reporting period comprises a reporting timer, and/or the DSR is reported in a case that the reporting timer expires.

5. The method of claim 1, wherein the first condition comprises a DSR triggering period.

6. The method of claim 5, wherein the DSR triggering period is a triggering period that is set for a first object.

7. The method of claim 5 or 6, wherein the DSR triggering period comprises a triggering timer, and/or the DSR is triggered in a case that the triggering timer expires.

8. The method of any one of claims 2-7, comprising at least one of following:
triggering the DSR only once in a DSR triggering period;
triggering the DSR in a case that a triggering timer expires;
starting a corresponding triggering timer in a case that the DSR is triggered;
reporting the DSR only once when the DSR is triggered;
reporting the DSR in a case that a reporting timer expires; or
starting a corresponding reporting timer in a case that the DSR is reported.

9. The method of claim 8, comprising at least one of following:
for a first object, triggering the DSR only once in the DSR triggering period;
for the first object, triggering the DSR in a case that the triggering timer expires;
for the first object, starting the corresponding triggering timer in a case that the DSR is triggered;
for the first object, reporting the DSR only once when the DSR is triggered;
for the first object, reporting the DSR in a case that the reporting timer expires; or
for the first object, starting the corresponding reporting timer in a case that the DSR is reported.

10. The method of claim 1, further comprising: not triggering the DSR and/or not reporting the DSR during running of a first prohibit timer.

11. The method of claim 10, wherein the first prohibit timer is started in at least one of following cases:
a DSR triggering exists;
a DSR reporting exists;
a media access control (MAC) control element (CE) carrying DSR information is generated;
a DSR or delay status (DS) information is carried in a MAC packet data unit (PDU) or a physical uplink shared channel (PUSCH); or
the MAC PDU or the PUSCH carrying the DSR or DS information is being transmitted or has been transmitted.

12. The method of claim 11, further comprising at least one of:
not triggering the DSR and/or not reporting the DSR during running of the first prohibit timer; or
triggering the DSR and/or reporting the DSR in a case that the first prohibit timer expires or does not run.

13. The method of claim 12, wherein the first prohibit timer is started in at least one of following cases:
the DSR triggering for the first object exists;
the DSR reporting for the first object exists;
the MAC CE carrying the DSR information for the first object is generated;
the DSR or the DS information for the first object is carried in the MAC PDU or the PUSCH; or
the MAC PDU or the PUSCH carrying the DSR or the DS information for the first object is being transmitted or has been transmitted.

14. The method of claim 13, further comprising at least one of following:
not triggering the DSR and/or not reporting the DSR for the first object during running of the first prohibit timer; or
triggering the DSR for the first object and/or reporting the DSR in the case that the first prohibit timer expires or does not run.

15. The method of claim 1, further comprising:
clearing the triggered DSR in a case that at least one of following cases is satisfied:
wherein the at least one of cases comprises: a MAC CE carrying the DSR information is generated; the DSR or DS information has been reported; the DSR or DS information is carried in a MAC PDU or a PUSCH; or the MAC PDU or the PUSCH carrying the DSR or the DS information is being transmitted or has been transmitted.

16. The method of claim 1, further comprising at least one of following:
not triggering DSR information for a first object for which the DSR information is being triggered or has been triggered; or
not triggering the DSR or not reporting the DSR for the first object for which the DSR information is being reported or has been reported.

17. The method of claim 9 or 13, wherein the first object is any one of User Equipment (UE), a Media Access Control (MAC) entity, an Logical Channel Group (LCG), an Logical Channel (LCH), a Packet Data Unit (PDU), a data packet, a PDU set, or a data burst, or the first object is any one of UE, a MAC entity, an LCG, an LCH, a PDU, a data packet, a PDU set, or a data burst, that is configured with a DSR function or enables the DSR.

18. The method of claim 1, wherein the first condition comprises at least one of following:
new data or a PDU or a PDU set arrives;
new data or a PDU or a PDU set arrives, and any one of the new data, the PDU or the PDU set does not trigger DSR information and/or report the DSR information;
new data or a PDU or a PDU set arrives, any one of the new data, the PDU or the PDU set does not trigger the DSR information and/or report the DSR information, and a second condition is satisfied;
a delay of new data or a PDU or a PDU set is less than a threshold or within a first threshold range;
a delay of new data or a PDU or a PDU set is less than the threshold or within the first threshold range, and any one of the new data, the PDU or the PDU set does not trigger the DSR information and/or report the DSR information; or
a delay of new data or a PDU or a PDU set is less than the threshold or within the first threshold range, any one of the new data, the PDU or the PDU set does not trigger the DSR information and/or report the DSR information, and the second condition is satisfied.

19. The method of claim 18, comprising at least one of following:
the new data or the PDU or the PDU set belongs to a second object; or
the new data or the PDU or the PDU set belongs to a first object;
wherein the second object comprises any one of data, a PDU, a PDU set, an LCG, an LCH, a MAC entity, or UE.

20. The method of claim 18 or 19, comprising at least one of following:
the DSR triggering or the DSR reporting is triggered by the second object;
the DSR triggering or the DSR reporting is for the second object; or
the DSR triggering or the DSR reporting is for the first object and the second object.

21. The method of claim 18, wherein the second condition comprises any one of following:
a delay of the new data, the PDU, the PDU set, a LCH, a LCG, a MAC entity or UE is less than a preset threshold, or belongs to a first threshold range;
a DSR prohibit timer of the new data, the PDU, the PDU set, the LCH, the LCG, the MAC entity, or the UE is not running;
the new data, the PDU, the PDU set, the LCH, the LCG, the MAC entity or the UE reaches a DSR reporting timer and/or triggering timer is not running; or
the new data, the PDU, the PDU set, the LCH, the LCG, the MAC entity, or the UE reaches a DSR reporting period or a triggering period.

22. The method of claim 1, further comprising:
for data, a PDU, a PDU set, a LCH, a LCG, a MAC entity or UE for which the DSR has been triggered, not triggering the DSR and/or not reporting the DSR; or
for data, a PDU, a PDU set, a LCH, a LCG, a MAC entity or UE for which the DSR has been reported, not triggering the DSR and/or not reporting the DSR; or
for the data, the PDU, the PDU set, the LCH, the LCG, the MAC entity or the UE for which the DSR has been triggered, and in a case that a third condition is satisfied, not triggering the DSR, and/or not reporting the DSR; or
for the data, the PDU, the PDU set, the LCH, the LCG, the MAC entity or the UE for which the DSR has been reported, and in the case that the third condition is satisfied, not triggering the DSR, and/or not reporting the DSR.

23. The method of claim 22, wherein the third condition comprises one of following:
a delay of the data, the PDU, the PDU set, the LCH, the LCG, the MAC entity or the UE is less than a threshold;
a prohibit timer for the data, the PDU, the PDU set, the LCH, the LCG, the MAC entity or the UE is not running; or
the data, the PDU, the PDU set, the LCH, the LCG, the MAC entity, or the UE reaches a reporting period.

24. The method of claim 1, comprising:
in a case that a third condition is satisfied, not triggering the DSR and/or not triggering the DSR for data, a PDU, a PDU set, a LCH, a LCG, a MAC entity or UE for which the DSR has been triggered; or
in the case that the third condition is satisfied, not triggering the DSR and/or not reporting the DSR for data, a PDU, a PDU set, a LCH, a LCG, a MAC entity or UE for which the DSR has been reported; or
in the case that the third condition is satisfied, for the data, the PDU, the PDU set, the LCH, the LCG, the MAC entity or the UE for which the DSR has been triggered, in a case that the fourth condition is satisfied, not triggering the DSR and/or not reporting the DSR; or
in the case that the third condition is satisfied, for the data, the PDU, the PDU set, the LCH, the LCG, the MAC entity or the UE for which the DSR has been reported, in a case that the fourth condition is satisfied, not triggering the DSR and/or not reporting the DSR.

25. The method of claim 1, further comprising:
when data, a PDU, a PDU set, a LCH, a LCG, a MAC entity or UE for which the DSR has been triggered exists, for a third object, not triggering the DSR and/or not reporting the DSR; or
when data, a PDU, a PDU set, a LCH, a LCG, a MAC entity or UE for which the DSR has been reported exists, for the third object, not triggering the DSR and/or not reporting the DSR; or
when the data, the PDU, the PDU set, the LCH, the LCG, the MAC entity or the UE for which the DSR has been triggered exists, for the third object, in a case that a fifth condition is satisfied, not triggering the DSR and/or not reporting the DSR; or
when data, a PDU, a PDU set, a LCH, a LCG, a MAC entity or UE for which the DSR has been reported exists, for the third object, in the case that the fifth condition is satisfied, not triggering the DSR and/or not reporting the DSR; or
in the case that the third condition is satisfied, when the data, the PDU, the PDU set, the LCH, the LCG, the MAC entity or the UE for which the DSR has been triggered exists, for the third object, not triggering the DSR and/or not reporting the DSR; or
in the case that the third condition is satisfied, when the data, the PDU, the PDU set, the LCH, the LCG, the MAC entity or the UE for which the DSR has been reported exists, for the third object, not triggering the DSR and/or not reporting the DSR; or
in the case that the third condition is satisfied, when the data, the PDU, the PDU set, the LCH, the LCG, the MAC entity or the UE for which the DSR has been triggered exists, for the third object, in a case that a fifth condition is satisfied, not triggering the DSR and/or not reporting the DSR; or
in the case that the third condition is satisfied, when the data, the PDU, the PDU set, the LCH, the LCG, the MAC entity or the UE for which the DSR has been reported exists, for the third object, in a case that the fifth condition is satisfied, not triggering the DSR and/or not reporting the DSR;
wherein the third object comprises any one of following:
a PDU for which the DSR has been triggered and/or reported;
a PDU set corresponding to the PDU for which the DSR has been triggered and/or reported;
a data burst corresponding to the PDU for which the DSR has been triggered and/or reported;
a LCH corresponding to the PDU for which the DSR has been triggered and/or reported;
a LCG corresponding to the PDU for which the DSR has been triggered and/or reported;
a MAC entity corresponding to the PDU for which the DSR has been triggered and/or reported;
UE corresponding to the PDU for which the DSR has been triggered and/or reported;
a PDU set for which the DSR has been triggered and/or reported;
a data burst corresponding to the PDU set for which the DSR has been triggered and/or reported;
a LCH corresponding to the PDU set for which the DSR has been triggered and/or reported;
a LCG corresponding to the PDU set for which the DSR has been triggered and/or reported;
a MAC entity corresponding to the PDU set for which the DSR has been triggered and/or reported;
UE corresponding to the PDU set for which the DSR has been triggered and/or reported;
a data burst for which the DSR has been triggered and/or reported;
a LCH corresponding to the data burst for which the DSR has been triggered and/or reported;
a LCG corresponding to the data burst for which the DSR has been triggered and/or reported;
a MAC entity corresponding to the data burst for which the DSR has been triggered and/or reported;
UE corresponding to the data burst for which the DSR has been triggered and/or reported;
a LCH for which the DSR has been triggered and/or reported;
a LCG corresponding to the LCH for which the DSR has been triggered and/or reported;
a MAC entity corresponding to the LCH for which the DSR has been triggered and/or reported;
UE corresponding to the LCH for which the DSR has been triggered and/or reported;
a LCG for which the DSR has been triggered and/or reported;
a MAC entity corresponding to the LCG for which the DSR has been triggered and/or reported;
UE corresponding to the LCG for which the DSR has been triggered and/or reported;
a MAC entity for which the DSR has been triggered and/or reported;
a MAC entity corresponding to the MAC entity for which the DSR has been triggered and/or reported; or
UE for which the DSR has been triggered and/or reported.

26. The method of claim 1, further comprising:
if the DSR has been triggered for a first LCG, not triggering the DSR within a second time period any more, or not triggering the DSR for the first LCG within the second time period; or not triggering the DSR any more, or not triggering the DSR for the first LCG within the second time period; and/or
if the DSR has been reported for the first LCG, not reporting the DSR within the second time period any more, or not reporting the DSR for the first LCG within the second time period; or not reporting the DSR any more, or not reporting the DSR for the first LCG within the second time period.

27. The method of claim 26, further comprising:
if DSR information has been triggered for a first LCH or first data or a first PDU in the first LCG, not triggering the DSR information any more, or not triggering the DSR information for the first LCG, or not triggering the DSR information within the second time period any more, or not triggering the DSR information for the first LCG within the second time period any more; and/or
if the DSR information has been reported for the first LCH or the first data or the first PDU in the first LCG, not reporting the DSR information any more, or not reporting the DSR information for the first LCG, or not reporting the DSR information within the second time period any more, or not reporting the DSR information for the first LCG within the second time period any more.

28. The method of claim 1, further comprising:
if the DSR has been triggered for a first LCG, triggering and/or reporting the DSR, or triggering and/or reporting the DSR for the first LCG, or triggering and/or reporting the DSR for a fifth object, in a case that one of following conditions is satisfied; and/or
if the DSR has been reported for the first LCG, triggering and/or reporting the DSR, or triggering and/or reporting the DSR for the first LCG, or triggering and/or reporting the DSR for the fifth object, in a case that one of the following conditions is satisfied,
wherein the conditions are:
a DSR that has been triggered is for a fourth object, and a new DSR to be triggered or reported corresponds to the fifth object; or
a DSR that has been reported is for the fourth object, and the new DSR to be triggered or reported corresponds to the fifth object; or
the DSR that has been reported is for the fourth object, and the new DSR to be triggered or reported corresponds to the fourth object and the fifth object; or
if the DSR has been trigger for the fourth object, and the fifth object satisfies a DSR triggering condition, and a sixth condition is satisfied; or
if the DSR has been reported for the fourth object, and the fifth object satisfies the DSR trigger condition, and the sixth condition is satisfied,
wherein the fourth object comprises at least one of following: a first LCH belonging to the first LCG, a first LCH, data in the first LCH, a PDU in the first LCH, or a PDU set in the first LCH;
the fifth object comprises at least one of following: a second LCH belonging to the first LCG, a second LCH, data in the second LCH, a PDU in the second LCH, or a PDU set in the second LCH; and
the sixth condition comprises that a DSR triggering threshold of the second LCH is lower than a DSR triggering threshold of the first LCH, and/or a data priority of the second LCH is higher than a data priority of the first LCH.

29. The method of claim 1, further comprising:
if the DSR has been triggered for a first LCG, triggering and/or reporting the DSR, or triggering and/or reporting the DSR for the first LCG, or triggering and/or reporting the DSR for a fifth object, or triggering and/or reporting the DSR for UE, in a case that one of following conditions is satisfied; and/or,
if the DSR has been reported for the first LCG, triggering and/or reporting the DSR, or triggering and/or reporting the DSR for the first LCG, or triggering and/or reporting the DSR for the fifth object, or triggering and/or reporting the DSR for the UE, in a case that one of the following conditions is satisfied,
wherein the condition is:
a DSR that has been triggered is triggered by the fourth object, and a new DSR to be triggered or reported corresponds to the fifth object; or
a DSR that has been reported is for the fourth object, and the new DSR to be triggered or reported corresponds to the fifth object; or
the DSR that has been reported is for the fourth object, and the new DSR to be triggered or reported corresponds to the fourth object and the fifth object; or
the DSR that has been reported is for the fourth object, and the new DSR to be triggered or reported corresponds to the UE; or
if the DSR has been triggered for the fourth object, and the fifth object satisfies a DSR triggering condition, and a sixth condition is satisfied; or
if the DSR has been reported for the fourth object, and the fifth object satisfies the DSR triggering condition, and the sixth condition is satisfied,
wherein the fourth object comprises at least one of following: a first LCH belonging to the first LCG, a first LCH, data in the first LCH, a PDU in the first LCH, or a PDU set in the first LCH;
the fifth object comprises at least one of following: a second LCG, a second LCH belonging to the second LCG, data belonging to the second LCG, a PDU belonging to the second LCG, a PDU set belonging to the second LCG, a second LCH belonging to the first LCG, a second LCH, data in the second LCH, a PDU in the second LCH, or a PDU set in the second LCH; and
the sixth condition comprises that a DSR triggering threshold of the second LCH or the second LCG is lower than a DSR triggering threshold of the first LCH or the first LCG, and/or a data priority of the second LCH or the second LCG is higher than a data priority of the first LCH or the first LCG.

30. The method of claim 1, further comprising:
if a first LCG has triggered DSR information and a second LCG satisfies a DSR triggering condition, triggering the DSR information for the first LCG and the second LCG; or
if the first LCG has triggered the DSR information and the second LCG satisfies the DSR triggering condition, triggering the DSR information for the second LCG.

31. The method of claim 1, further comprising:
if DSR information has been triggered for a first LCG and a second LCG satisfies a DSR triggering condition and a sixth condition is satisfied, triggering the DSR information for the first LCG and the second LCG; or
if the DSR information has been triggered for the first LCG, and the second LCG satisfies the DSR triggering condition and a seventh condition is satisfied, triggering the DSR information for the second LCG.

32. The method of claim 31, wherein the seventh condition comprises: a DSR triggering threshold of the second LCG is lower than a DSR triggering threshold of the first LCG, and/or a data priority of the second LCG is higher than a data priority of the first LCG.

33. The method of claim 1, further comprising:
if a second LCG satisfies a DSR triggering condition, triggering DSR information for UE or for the second LCG; or, if DSR information has been triggered for the first LCG and the second LCG satisfies the DSR triggering condition, triggering the DSR information for the UE or for the second LCG.

34. The method of claim 1, further comprising:
if DSR reporting has been triggered for a first LCG and a second LCG satisfies a DSR triggering condition and an eighth condition is satisfied, triggering DSR information for UE or for the second LCG,
wherein the eighth condition comprises: a DSR triggering threshold of the second LCG is lower than a DSR triggering threshold of the first LCG, and/or a data priority of the second LCG is higher than a data priority of the first LCG.

35. The method of claim 1, wherein a MAC CE comprising the DSR is a MAC CE with a fixed length or a MAC CE with a variable length.

36. The method of claim 35, wherein the length of the MAC CE is related to any one of following:
a number of LCGs for which DSR information is reported;
a number of pieces of reported DSR information;
whether a LCG that is configured to report the DSR information has the DSR information; or
a number of pieces of DSR information that needs to be reported or is reported in the LCG that is configured to report the DSR information.

37. The method of claim 35, wherein the MAC CE comprises following information indications: an LCG identifier, an LCH identifier, DSR information, a data volume corresponding to the DSR information, and a data volume corresponding to the LCG or LCH.

38. The method of claim 35, wherein one MAC CE comprises one piece of DSR information, or a plurality of pieces of DSR information.

39. The method of any one of claims 1 to 38, wherein one MAC CE comprises DSR information of one LCG or one LCH, or comprises DSR information of a plurality of LCGs or LCHs, or comprises DSR information of specific LCH(s) or LCG(s).

40. The method of any one of claims 1 to 38, wherein DSR information is delay value(s), delay index/threshold(s), or delay range(s).

41. The method of any one of claims 1 to 38, wherein data volume information of data volume corresponding to DSR information is data volume information corresponding to delay value(s), or data volume information of delay index(s)/threshold(s), or data volume information of delay range(s), or data volume information corresponding to each delay value, or data volume information of each delay index/threshold, or data volume information of each delay range, or data volume information corresponding to specific delay value(s), or data volume information of specific delay index(s)/threshold(s), or data volume information of specific delay range(s).

42. The method of claim 39 or 40, wherein one MAC CE comprises DSR information, and the DSR information is information corresponding to data of an LCG or LCH that is configured with or enables the DSR, or the DSR information is information corresponding to an LCG that is configured with or enables the DSR, or the DSR information is information corresponding to an LCH that is configured with or enables the DSR, or the DSR information is information corresponding to UE that is configured with or enables the DSR, or the DSR information is information corresponding to a MAC entity that is configured with or enables the DSR.

43. The method of claim 42, wherein the information is information corresponding to an LCH or an LCG or a MAC entity or UE or data that satisfies a DSR triggering condition or a DSR reporting condition, or the information is information corresponding to an LCH or an LCG or a MAC entity or a UE or data for which the DSR is triggered or the DSR is reported.

44. The method of any one of claims 38 to 43, wherein the MAC CE comprises first indication information or a first indication bit for an LCH or an LCG, and the first indication information or the first indication bit is used to indicate whether DSR information corresponding to the LCH or the LCG is reported or comprised.

45. The method of claim 44, comprising:
if the MAC CE comprises the indication information or the indication bit indicating DSR reporting, the indication information or the indication bit indicates that the DSR information is not reported, and the length of the MAC CE is variable; and/or
if the MAC CE comprises the indication information or the indication bit indicating the DSR reporting, the indication information or the indication bit indicates that the DSR information is not reported, and the MAC CE does not carry DSR information of a first LCG,
wherein the indication information or the indication bit is used to indicate an LCG for which the DSR information is not reported, or the indication information or the indication bit is used to indicate that the DSR information is not reported for the first LCG.

46. The method of any one of claims 37 to 39, further comprising:
the MAC CE does not comprise DSR information of a first LCG or LCH for which the DSR is not triggered or that does not satisfy a DSR triggering condition, or the MAC CE does not comprise DSR information of the first LCG or LCH that does not satisfy DSR reporting; or the MAC CE comprises only DSR information of a second LCG or LCH for which the DSR is triggered or that satisfies the DSR triggering condition, or the MAC CE comprises only the DSR information of the second LCG or LCH that satisfies DSR reporting; or
the MAC CE further comprises DSR information of the first LCG or LCH that does not satisfy the condition of triggering the DSR or reporting the DSR.

47. The method of claim 1, comprising at least one of following;
for one LCG or one LCH, reporting one piece of DSR information or a specific number of pieces of DSR information; or
for one LCG that satisfies a DSR reporting condition or a condition of triggering the DSR, reporting one piece of DSR information or a specific number of pieces of DSR information; or
for each LCG that satisfies the DSR reporting condition or the condition of triggering the DSR, reporting one piece of DSR information or a specific number of pieces of DSR information; or
for a specific number of LCGs that satisfy the DSR reporting condition or the condition of triggering the DSR, reporting one piece of DSR information or a specific number of pieces of DSR information; or
for one LCH that satisfies the DSR reporting condition or the condition of triggering the DSR, reporting one piece of DSR information or a specific number of pieces of DSR information; or
for each LCH that satisfies the DSR reporting condition or the condition of triggering the DSR, reporting one piece of DSR information or a specific number of pieces of DSR information; or
for a specific number of LCHs that satisfy the DSR reporting condition or the condition of triggering the DSR, reporting one piece of DSR information or a specific number of pieces of DSR information.

48. The method of claim 1, wherein for each LCH or a specific LCH or a specific number of LCHs in an LCG group, one piece of DSR information is reported; or
for each LCH or a specific LCH or a specific number of LCHs in the LCG group, a specific number of pieces of DSR information is reported; or
for one LCH, or one LCG, DSR information of one piece of data or each piece of data or a specific amount of data or one data packet or each data packet or a specific number of data packets is reported.

49. The method of claim 1, wherein for LCH(s) in an LCG that satisfies a DSR reporting condition or a condition of triggering the DSR, one piece of DSR information is reported; or
for LCH(s) in the LCG that satisfies the DSR reporting condition or the condition of triggering the DSR, a specific number of pieces of DSR information is reported.

50. The method of claim 49, wherein the MAC CE comprises second indication information or a second indication bit for a first LCH, and the second indication information or the second indication bit is used to indicate whether DSR information of a first LCH is reported or comprised.

51. The method of claim 49, comprising:
if the MAC CE comprises indication information or indication bit indicating DSR reporting, the indication information or the indication bit indicates that the DSR information is not reported, and the length of the MAC CE is variable; and/or
if the MAC CE comprises the indication information or the indication bit indicating the DSR reporting, the indication information or the indication bit indicates that the DSR information is not reported, and the MAC CE does not carry DSR information of a first LCH,
wherein the indication information or the indication bit is used to indicate an LCH for which the DSR information is not reported, or the indication information or the indication bit is used to indicate that the DSR information is not reported for the first LCH.

52. The method of any one of claims 49 to 50, further comprising:
the MAC CE does not comprise DSR information of a first LCG or LCH for which the DSR is not triggered or that does not satisfy a DSR reporting condition, or the MAC CE does not comprise DSR information of the first LCG or LCH that does not satisfy DSR reporting; or the MAC CE comprises only DSR information of a second LCG or LCH for which the DSR is triggered or that satisfies the DSR triggering condition, or the MAC CE comprises only the DSR information of the second LCG or LCH that satisfies DSR reporting; or
the MAC CE further comprises DSR information of the first LCG or LCH that does not satisfy the condition of triggering the DSR or reporting the DSR.

53. The method of claim 1, further comprising:
triggering DSR information by any one PDU in a PDU set; or
triggering DSR information by specific PDU(s) in the PDU set; or
if reported DSR information is DSR information of the PDU set, triggering the DSR information by any one PDU in the PDU set; or
if the reported DSR information is the DSR information of the PDU set, triggering the DSR information by the specific PDU(s) in the PDU set.

54. The method of claim 53, wherein the reported DSR information is DSR information of any one PDU in the PDU set; or
the reported DSR information is DSR information of specific PDU(s) in the PDU set.

55. The method of claim 54, wherein the reported DSR information comprises:
for a sixth object, reporting one or more pieces of DSR information, wherein the sixth object is an LCG or an LCH or a PDU set or a data burst or UE.

56. The method of claim 55, wherein the sixth object comprises any one of following: all PDUs, all PDU sets, all LCHs, or all LCGs in a buffer; or
the sixth object comprises any one of following: all PDUs, all PDU sets, all LCHs, or all LCGs corresponding to a delay; or
the sixth object comprises any one of following: all PDUs, all PDU sets, all LCHs, or all LCGs corresponding to the delay and configured with DSR reporting in the buffer; or,
the sixth object comprises any one of following: all PDUs, all PDU sets, all LCHs, or all LCGs configured with DSR reporting in the buffer.

57. The method of claim 55, wherein the DSR information comprises any one of delay threshold information, delay segment information, delay index information, delay value information, or delay information of different PDU sets for one burst data, or the DSR information corresponds to any one of delay threshold, delay segment, delay index, delay value, or delay information of different PDU sets for one burst data.

58. The method of claim 55, wherein the DSR information comprises minimum delay information, or DSR information corresponding to a PDU or a PDU set for which the DSR information has not been reported.

59. The method of claim 55, wherein the DSR information comprises information for a data volume to be transmitted of a corresponding delay segment of the sixth object, or information for all data volumes to be transmitted of the sixth object.

60. The method of claim 55, wherein the plurality of pieces of DSR information, or DSR data comprised on one MAC CE, or a number of DSRs reported for one LCH or one LCG is determined by any one of following manners:
preconfigured;
predefined;
indicated by Radio Resource Control (RRC);
determined by UE; or
a fixed value.

61. The method of claim 52, wherein a range, a delay index, a delay threshold, a maximum value, or a minimum value of the first delay information in the DSR information is determined by any one of following manners:
preconfigured;
predefined;
indicated by Radio Resource Control (RRC); or
a fixed value.

62. A method for delay information processing, comprising:
in a case of congestion or receiving first information, or in a case that the first information indicates a specific content or a specific value, performing, by User Equipment (UE), a first behavior, wherein the first behavior comprises at least one of following:
initiating packet loss processing;
enabling packet loss processing for a Packet Data Unit (PDU) set;
enabling packet loss processing for PDU set importance (PSI);
enabling processing for the congestion;
using a specific packet loss timer or timer duration;
determining an important or unimportant PDU set;
determining a judgment threshold or criterion for the important or unimportant PDU set;
deactivating a delay status reporting (DRS) reporting function, or a DSR mechanism;
stopping a DSR reporting or triggering function, or not reporting DSR information; or
deconfiguring DSR triggering or reporting.

63. The method of claim 62, wherein an operation of performing at least one of not triggering DSR, not reporting DSR, stopping the DSR function, stopping the DSR triggering or reporting, deconfiguring DSR mechanism, deconfiguring the DSR triggering or reporting, deactivating the DSR mechanism, or deactivating DSR triggering or reporting comprises at least one of:
clearing triggered DSR information;
stopping all timers corresponding to the DSR information;
deactivating configured DRS reporting function, or stopping a unconfigured DSR reporting function, or stoppingtriggering, reporting, and generating MAC CE function; or
clearing all DSR information.

64. The method of claim 62 or 63, wherein the DSR information is DSR information of an object having a degree of importance lower than a first preset threshold, or DSR information of an object judged to be unimportant, or DSR information of an object having a priority lower than a second preset threshold, or DSR information of an object judged to be a low priority, and the object comprises any one of a PDU, a PDU set, a Logical Channel Group (LCG), or a Logical Channel (LCH).

65. The method of claim 64, wherein the degree of importance or the priority is determined by any one of following manners:
determined by UE;
determined based on a threshold issued by a network;
a priority of a LCH or a LCG;
a threshold determined by the UE;
feature information of a first object;
indication information of the network; or
an identifier of the LCG or the LCH.

66. The method of claim 65, wherein the threshold or the identifier or the priority or the feature information of the first object is determined by any one of following manners:
preconfigured;
configured by Radio Resource Control (RRC);
indicated by the network;
configured in the first information; or
determined by the UE.

67. The method of claim 62, further comprising:
in a logical channel prioritization (LCP), setting a priority of a MAC CE corresponding to a DSR to be lower than a priority of data, or
in the LCP, setting the priority of the MAC CE corresponding to the DSR to lowest.

68. The method of claim 62, further comprising:
in a LCP, setting a priority of a MAC CE corresponding to a DSR of a specific object to be lower than a priority of data, or
in the LCP, setting the priority of the MAC CE corresponding to the DSR of the specific object to lowest;
wherein the specific object comprises any one of a specific PDU, a specific PDU set, a specific LCG, or a specific LCH; or the specific object comprises any one of a PDU, a PDU set, a LCG, or a LCH with a low priority, or the specific object comprises any one of an unimportant PDU, an unimportant PDU set, an unimportant LCG, or an unimportant LCH.

69. The method of claim 62, further comprising:
triggering the DSR information and not reporting the DSR information; or for a specific object, triggering the DSR information and not reporting the DSR information,
wherein the specific object comprises any one of a specific PDU, a specific PDU set, a specific LCG, or a specific LCH; or the specific object comprises any one of a PDU, a PDU set, a LCG, or a LCH with a low priority, or the specific object comprises any one of an unimportant PDU, an unimportant PDU set, an unimportant LCG, or an unimportant LCH.

70. The method of claim 62, wherein the first behavior further comprises:
not triggering the DSR information, or not reporting the DSR information, or for a specific object, not triggering the DSR information, or not reporting the DSR information,
wherein the specific object comprises any one of a specific PDU, a specific PDU set, a specific LCG, or a specific LCH; or the specific object comprises any one of a PDU, a PDU set, a LCG, or a LCH with a low priority, or the specific object comprises any one of an unimportant PDU, an unimportant PDU set, an unimportant LCG, or an unimportant LCH.

71. The method of claim 62, wherein the first behavior further comprises:
not triggering DSR because a PDCP discard timer expires; or not triggering the DSR based on a delay being less than a first threshold, or not triggering the DSR information based on a duration of a PDCP packet loss timer; or
for a specific object, not triggering the DSR because the PDCP discard timer expires; or not triggering the DSR based on the delay being less than the first threshold, or not triggering the DSR information based on the duration of the PDCP packet loss timer; or
not reporting the DSR because the PDCP discard timer expires; or not reporting the DSR based on the delay being less than the first threshold, or not reporting the DSR information based on the duration of the PDCP packet loss timer; or
for a specific object, not reporting the DSR because the PDCP discard timer expires; or not reporting the DSR based on the delay being less than the first threshold, or not reporting the DSR information based on the duration of the PDCP packet loss timer.

72. The method of claim 62, wherein the first behavior further comprises:
for an object whose importance is lower than a preset threshold, or an unimportant object, or an object with a low priority, not triggering the DSR information; or
for the object whose importance is lower than the preset threshold, or the unimportant object, or the object with the low priority, not reporting the DSR information;
wherein the object comprises any one of a PDU, a PDU set, a LCG, or a LCH.

73. The method of claim 62, wherein in the packet loss processing for the PDU set, in a case that a PDCP discard timer of a first object expires, or for the first object corresponding to the expiry of the PDCP discard timer, DSR is not triggered, the DSR is not reported, or data volume information corresponding to the object is not calculated into a data volume to be transmitted,
wherein the first object is any one of a PDU, a PDU set, a LCG, or a LCH.

74. The method of claim 62, comprising:
for an object with a low priority or for an unimportant object, in a case that a PDCP discard timer expires, not triggering DSR, or not reporting the DSR, or not calculating data volume information corresponding to the object into a data volume to be transmitted; or
if the packet loss processing for the PSI is enabled, for the object with the low priority or for the unimportant object, in the case that the PDCP discard timer expires, not triggering the DSR, or not reporting the DSR, or not calculating data volume information corresponding to the object into the data volume to be transmitted;
wherein the object is any one of a PDU, a PDU set, a LCG, or a LCH.

75. The method of claim 62, wherein the first information comprises RRC configuration information and/or congestion indication information or indication information used by PSI-discard.

76. The method of claim 75, wherein the first information is used to indicate any one piece of following information:
initiating the packet loss processing;
enabling the packet loss processing for the PDU set;
enabling the packet loss processing for the PSI;
indicating processing for the congestion;
indicating use of the specific packet loss timer or the timer duration;
packet loss timer information indicated by a network;
threshold information indicated by the network;
the judgment threshold for the important or unimportant PDU set indicated by the network; or
deactivating configured DRS reporting function, or stopping unconfigured DSR reporting function, or deconfiguring the DRS reporting function, or stopping the DRS reporting function.

77. The method of claim 62, wherein the first information is used to indicate any one piece of following information:
information of the UE;
information of a MAC entity;
information of all DRBs;
information of a plurality of specific DRBs; or
information of a specific DRB.

78. The method of claim 77, wherein the first information is used to indicate the information of the UE, or a behavior of the UE;
wherein the behavior of the UE comprises any one of following:
a behavior of the UE;
behaviors of all Data Radio Bearers (DRB) or MAC entities of the UE;
an operation to be performed by the UE; or
operations to be performed by all the DRBs or MAC entities.

79. The method of claim 77, wherein the first information is used to indicate the information of the MAC entity, or a behavior of the UE;
wherein the behavior of the UE comprises any one of following:
a behavior of the MAC entity;
behaviors of all DRB entities of the MAC entity;
an operation to be performed by the MAC entity; or
operations to be performed by all the DRB entities of the MAC entity.

80. The method of claim 79, wherein the first information comprises an identifier of the MAC entity;
wherein the MAC entity is a MAC entity corresponding to a carrier on which the first information is received; or the MAC entity is a MAC entity corresponding to a base station device that sends or generates the first information.

81. The method of claim 77, wherein the first information is used to indicate DRB information, or a behavior of the UE.

82. The method of claim 81, wherein the first information is used to indicate information of one DRB, or information of specific DRB(s), or information of all DRBs, or information of each DRB;
the first information is used to indicate a behavior of the UE for one DRB, or a behavior of the UE for the specific DRB(s), or a behavior of the UE for all the DRBs, or a behavior of the UE for each DRB.

83. The method of claim 80, wherein the first information carries identifier(s) of the DRB, and/or parameter(s) for the DRB(s), and/or behavior(s) for the DRB(s).

84. The method of claim 80, wherein the first information is indicated for per DRB, or for per UE, or for per MAC entity; or
the first information is common to all DRBs, indicated separately for DRBs, or common to specific DRB(s).

85. The method of claim 84, further comprising any one of following:
a plurality of DRBs correspond to one piece of first information;
the first information instructs the UE to perform an operation corresponding to the first information for the plurality of DRBs;
each DRB corresponds to one piece of first information; or
the first information indicates performing an operation corresponding to the respective first information for each DRB.

86. The method of claim 81, wherein the first information is used to indicate information of all DRBs, or the first information is used to indicate a behavior of the UE corresponding to all the DRBs.

87. The method of claim 86, wherein the first information carries identifiers of the DRBs, or the first information carries bitmap information of the DRBs.

88. The method of claim 86, wherein a plurality or all of the DRBs are arranged in ascending or descending order in the bitmap.

89. The method of claim 87, wherein the first information is information for DRBs, and a position of each piece of information corresponds to a position or ranking of a DRB corresponding to each piece of information.

90. The method of claim 62, wherein an object indicated by the first information and an object indicated by DSR information are same or different.

91. The method of claim 62, wherein the first information is used to indicate a LCG or LCH performing a DSR operation; or
the first information is used to indicate whether the DSR operation is for the UE.

92. The method of claim 62, wherein the first information is carried in RRC or PDCP signaling or MAC Control Element (MAC CE) or Downlink Control Information (DCI).

93. The method of claim 62, wherein the packet loss processing for the PDU set comprises: a PDCP layer indicating M-th information to a lower layer, wherein the lower layer comprises an Radio Link Control (RLC) layer and/or a MAC layer, and the M-th information is used to indicate which PDU(s) or PDU set(s) or data volume(s) to be transmitted corresponding to data packets is used for DSR reporting, or is used to be carried in a MAC CE comprising the DSR, or is data volume(s) to be transmitted corresponding to the DSR, or which PDU(s) or PDU set(s) or data packet(s) correspond to a PDCP discard timer that expires or does not run, or indicate that the PDU(s) or PDU set(s) or data volume(s) corresponding to data packet(s) corresponding to the PDCP discard timer that expires or does not run is not taken as data volume(s) used for Buffer Status Report (BSR) or DSR statistics or reporting.

94. The method of claim 62, wherein a number of Data Signaling Bearers (DSBs) indicated by the first information is 8 or 16.

95. An information triggering method, comprising:
receiving first information sent by a base station, wherein the first information is used to indicate whether User Equipment (UE) triggers a Conditional Handover (CHO) evaluation or execution or evaluates other CHO condition, or the first information is used to indicate whether a network saves energy or enters an energy saving state or uses an energy saving technology or when the network device saves energy.

96. The method of claim 95, wherein the network is a source base station and/or a target base station.

97. The method of claim 95, wherein the first information is used to instruct the UE to trigger the CHO evaluation or execution or evaluate the other CHO condition, or to trigger the UE to evaluate or execute the CHO or evaluate the other CHO condition, or to instruct the UE to trigger the CHO evaluation or execution corresponding to network energy saving or evaluate the other CHO condition, or to instruct the UE to perform the CHO evaluation or execution or evaluate other CHO condition in an indicated cell, or to instruct the UE to perform the CHO evaluation or execution or evaluate the other CHO condition in a cell, in which energy is saved, in the energy saving state, or in which the energy saving technology is used, or to instruct the UE to perform the CHO evaluation or execution or evaluate the other CHO condition in a network, in which energy is saved, in the energy saving state, or in which the energy saving technology is used.

98. The method of claim 95, wherein the first information is carried in downlink control signaling (DCI); and/or a first information cell identifier or a cell bitmap.

99. The method of claim 95, wherein the first information is indication information for per Cell, or indication information for per UE, or indication information for per group, or indication information for a specific cell, or indication information for a Primary Cell (Pcell) and/or a PSCEll.

100. The method of claim 97, wherein the DCI is any one of following:
newly defined DCI or a newly defined DCI format corresponding to the newly defined DCI;
existing DCI or an existing DCI format corresponding to the existing DCI;
DCI for activating cell discontinuous transmission or discontinuous reception;
DCI for deactivating cell discontinuous transmission or discontinuous reception;
DCI format 2_X;
the DCI corresponding to a specific RNTI; or
the DCI corresponding to a specific search space.

101. The method of claim 97, wherein the first information is located in a reserved bit in the DCI; or the first information multiplexes an existing bit in the DCI; or
the reserved bit in the DCI is used to represent the first information; or the existing bit in the DCI is multiplexed to represent the first information.

102. The method of claim 95, wherein
the first information is used to indicate any one of following:
the first information is used to indicate whether the UE triggers the CHO evaluation or execution or evaluates the other CHO condition;
the first information is to indicate whether the UE believes whether the network saves energy or enters the energy saving state or uses the energy saving technology or when the network device saves energy;
the first information is used to indicate whether the UE that receives DCI information triggers the CHO evaluation or execution or evaluates the other CHO condition;
the first information is used to indicate whether the UE that receives the DCI information believes whether the network saves energy or enters the energy saving state or uses the energy saving technology or when the network device saves energy;
the first information is used to indicate whether the network saves energy or enters the energy saving state or uses the energy saving technology or when the network device saves energy;
the first information is used to indicate whether one or more specific cells save energy or enter the energy saving state or use the energy saving technology or when the one or more specific cells save energy;
the first information is used to indicate whether one or more cells save energy or enter the energy saving state or use the energy saving technology or when the one or more cells save energy;
the first information is used to indicate whether the UE believes that the network saves energy or enters the energy saving state or uses the energy saving technology or when the network device saves energy;
the first information is used to indicate whether the UE believes whether the one or more specific cells save energy or enter the energy saving state or use the energy saving technology or when the one or more specific cells save energy;
the first information is used to indicate whether the UE believes whether one or more cells save energy or enter the energy saving state or use the energy saving technology or when the one or more cells save energy;
the first information is used to indicate whether the UE that receives the DCI information believes whether the network saves energy or enters the energy saving state or uses the energy saving technology or when the network device saves energy;
the first information is used to indicate whether the UE that receives the DCI information believes whether one or more specific cells save energy or enter the energy saving state or use the energy saving technology or when the one or more specific cells save energy;
the first information is used to indicate whether the UE that receives the DCI information believes whether one or more cells save energy or enter the energy saving state or use the energy saving technology or when the one or more cells save energy;
the first information is used to indicate whether the UE triggers the CHO evaluation or execution or evaluates the other CHO condition;
the first information is used to indicate whether the UE that receives the DCI information triggers the CHO evaluation or execution or evaluates the other CHO condition;
the first information is used to indicate whether the UE triggers the CHO evaluation or execution or evaluates the other CHO condition at the network;
the first information is used to indicate whether the UE that receives the DCI information triggers the CHO evaluation or execution or evaluates the other CHO condition at the network;
the first information is used to indicate whether the UE triggers the CHO evaluation or execution or evaluates the other CHO condition in an indicated cell;
the first information is used to indicate whether the UE that receives the DCI information triggers the CHO evaluation or execution in an indicated cell;
the first information is used to indicate whether each cell of the UE triggers the CHO evaluation or execution or evaluates the other CHO condition;
the first information is used to indicate whether each cell of the UE that receives the DCI information triggers the CHO evaluation or execution or evaluates the other CHO condition;
the first information is used to indicate whether the UE triggers the CHO evaluation or execution or evaluates the other CHO condition in a primary cell and/or a secondary cell;
the first information is used to indicate whether the UE that receives the DCI information triggers the CHO evaluation or execution or evaluates the other CHO condition in the primary cell and/or the secondary cell;
the first information is used to indicate whether a specific cell of the UE triggers the CHO evaluation or execution or evaluates the other CHO condition; or
the first information is used to indicate whether a specific cell of the UE that receives the DCI information triggers the CHO evaluation or execution or evaluates the other CHO condition.

103. The method of claim 95, further comprising at least one of following:
the first indication information is used for instructing the UE to perform measurement and/or CHO evaluation;
the first indication information is used for instructing the UE that receives DCI information to perform measurement and/or the CHO evaluation;
the first indication information is used to instruct the UE to perform measurement and/or the CHO evaluation in specific cell(s) or one cell or a certain cell or each cell or an indicated cell;
the first indication information is used to instruct the UE that receives the DCI information to perform measurement and/or the CHO evaluation in specific cell(s) or one cell or a certain cell or each cell or an indicated cell;
the first indication information is used to instruct the UE to evaluate other CHO conditions, or simultaneously evaluate other CHO conditions;
the first indication information is used to instruct the UE to determine whether to perform CHO based on a plurality of CHO evaluation conditions;
the first indication information is used to indicate that the UE can perform CHO only when at least one of CHO execution conditions of A3, A4, and A5 are satisfied simultaneously in a case that the network saves energy or in a condition that the network saves energy;
measuring a cell of the UE, and/or obtaining a measurement result;
determining, for the cell of the UE, according to the measurement result, whether to perform CHO, or whether a CHO execution cell is satisfied, or whether at least one of CHO execution conditions of A3, A4, and A5 is satisfied;
in a case that the measurement result satisfies a preset condition, if the first information indicates or triggers network energy saving , the UE performs CHO; or
in a case that the measurement result satisfies the preset condition, triggering, according to the first information, a CHO evaluation or execution or evaluating other CHO condition corresponding to the network energy saving.

104. The method of claim 95, wherein the first information is carried in a Media Access Control (MAC) Control Element (CE).

105. The method of claim 104, wherein the MAC CE is any one of following:
a dedicated MAC CE of the UE;
a common MAC CE of all UEs;
a MAC CE for all UE groups;
a MAC CE for all cells; or
a specific MAC CE, or a new MAC CE corresponding to the CHO execution.

106. The method of claim 104, wherein the MAC CE is identified by using a first Logical Channel Identifier (LCID) or an Extended LCID (eLCID) identifier; or the UE determines whether a MAC CE is the MAC CE by using the first LCID or eLCID identifier; or the MAC CE corresponds to a first logical channel identifier LCID or e-LCID; the LCID or 3-LCID is used to determine a role of the MAC CE, or to indicate a function of the MAC CE, or to distinguish the MAC CE from other MAC CEs.

107. The method of claim 95, wherein the first information is used to indicate any one of following:
the first information is used to indicate whether the UE triggers the CHO evaluation or execution or evaluates the other CHO condition;
the first information is to indicate whether the UE believes whether the network saves energy or enters the energy saving state or uses the energy saving technology or when the network device saves energy;
the first information is used to indicate whether the UE that receives DCI information triggers the CHO evaluation or execution or evaluates the other CHO condition;
the first information is used to indicate whether the UE that receives the DCI information believes whether the network saves energy or enters the energy saving state or uses the energy saving technology or when the network device saves energy;
the first information is used to indicate whether the network saves energy or enters the energy saving state or uses the energy saving technology or when the network device saves energy;
the first information is used to indicate whether one or more specific cells save energy or enter the energy saving state or use the energy saving technology or when the one or more specific cells save energy;
the first information is used to indicate whether one or more cells save energy or enter the energy saving state or use the energy saving technology or when the one or more cells save energy;
the first information is used to indicate whether the UE believes that the network saves energy or enters the energy saving state or uses the energy saving technology or when the network device saves energy;
the first information is used to indicate whether the UE believes whether the one or more specific cells save energy or enter the energy saving state or use the energy saving technology or when the one or more specific cells save energy;
the first information is used to indicate whether the UE believes whether one or more cells save energy or enter the energy saving state or use the energy saving technology or when the one or more cells save energy;
the first information is used to indicate whether the UE that receives the DCI information believes whether the network saves energy or enters the energy saving state or uses the energy saving technology or when the network device saves energy;
the first information is used to indicate whether the UE that receives the DCI information believes whether one or more specific cells save energy or enter the energy saving state or use the energy saving technology or when the one or more specific cells save energy;
the first information is used to indicate whether the UE that receives the DCI information believes whether one or more cells save energy or enter the energy saving state or use the energy saving technology or when the one or more cells save energy;
the first information is used to indicate whether the UE triggers the CHO evaluation or execution or evaluates the other CHO condition;
the first information is used to indicate whether the UE that receives the DCI information triggers the CHO evaluation or execution or evaluates the other CHO condition;
the first information is used to indicate whether the UE triggers the CHO evaluation or execution or evaluates the other CHO condition at the network;
the first information is used to indicate whether the UE that receives the DCI information triggers the CHO evaluation or execution or evaluates the other CHO condition at the network;
the first information is used to indicate whether the UE triggers the CHO evaluation or execution or evaluates the other CHO condition in an indicated cell;
the first information is used to indicate whether the UE that receives the DCI information triggers the CHO evaluation or execution or evaluates other CHO condition in an indicated cell;
the first information is used to indicate whether each cell of the UE triggers the CHO evaluation or execution or evaluates the other CHO condition;
the first information is used to indicate whether each cell of the UE that receives the DCI information triggers the CHO evaluation or execution or evaluates the other CHO condition;
the first information is used to indicate whether the UE triggers the CHO evaluation or execution or evaluates the other CHO condition in a primary cell and/or a secondary cell;
the first information is used to indicate whether the UE that receives the DCI information triggers the CHO evaluation or execution or evaluates the other CHO condition in the primary cell and/or the secondary cell;
the first information is used to indicate whether a specific cell of the UE triggers the CHO evaluation or execution or evaluates the other CHO condition;
the first information is used to indicate whether a specific cell of the UE that receives the DCI information triggers the CHO evaluation or execution or evaluates the other CHO condition;
the first information is used to indicate whether a cell triggers the CHO evaluation or execution or evaluates other CHO condition;
the first information is used to indicate whether each cell triggers the CHO evaluation or execution or evaluates other CHO condition;
the first information is used to indicate whether a specific cell triggers the CHO evaluation or execution or evaluates other CHO condition;
the first information is used to indicate whether a Pcell and/or PSCell triggers the CHO evaluation or execution or evaluates other CHO condition;
the first information is to indicate whether a MAC entity triggers the CHO evaluation or execution or evaluates other CHO condition; or
the first information is used to indicate whether the UE triggers the CHO evaluation or execution or evaluates other CHO condition.

108. The method of claim 107, wherein the first information being used for indicating whether the MAC entity triggers the CHO execution comprises at least one of following:
the first information being used to indicate whether all serving cells corresponding to the MAC entity of the UE evaluate or perform CHO or evaluate other CHO condition, or whether all serving cells corresponding to the MAC entity of the UE trigger the CHO evaluation or execution or evaluate other CHO condition; or
the first information being used to indicate whether an indicated cell corresponding to the MAC entity of the UE evaluates or performs CHO or evaluates other CHO condition, or whether the indicated cell corresponding to the MAC entity of the UE triggers CHO evaluation or execution or evaluates other CHO condition; or
the first information is used to indicate whether a primary cell or a secondary cell corresponding to the MAC entity evaluates or performs CHO or evaluates other CHO condition, or whether the primary cell or the secondary cell corresponding to the MAC entity triggers CHO evaluation or execution or evaluates other CHO condition; or
the first information is used to indicate whether the MAC entity that receives the MAC CE information evaluates or performs CHO or evaluates other CHO condition, or whether the MAC entity that receives the MAC CE information triggers the CHO evaluation or execution or evaluates other CHO conditions; or
the first information is used to indicate whether a specific cell corresponding to the MAC entity that receives the MAC CE information evaluates or performs CHO or evaluates other CHO condition, or whether the specific cell corresponding to the MAC entity that receives the MAC CE information triggers CHO evaluation or execution or evaluates other CHO condition; or
the first information is used to indicate whether a specific cell corresponding to the MAC entity that receives the MAC CE information evaluates or performs CHO or evaluates other CHO condition, or whether the specific cell corresponding to the MAC entity that receives the MAC CE information triggers CHO evaluation or execution or evaluates other CHO condition.

109. The method of claim 108, wherein the first information comprises a cell bit map, bits of the cell bit map correspond to different cells, and/or different bit positions in the cell bit map indicate whether corresponding cells save energy or trigger CHO execution, and/or the different bit positions in the cell bit map indicate whether the corresponding cells save energy or enter energy saving or use the energy saving technology or whether perform CHO or evaluate CHO or evaluate other CHO condition.

110. The method of claim 109, wherein the first information comprises cell indexes or cell identifiers; the cell indexes or cell identifiers are used to indicate corresponding cell information, and/or to indicate whether the corresponding cell saves energy or enters energy saving or uses the energy saving technology, and/or to indicate that CHO execution is triggered in the cell.

111. An apparatus for delay information processing, comprising:
a receiving module, configured to trigger a delay status reporting (DSR) in case of a first condition; and/or
a sending module, configured to report the DSR.

112. An apparatus for delay information processing, comprising:
a receiving module, configured to perform a first behavior in a case of congestion or receiving first information, or in a case that the first information indicates a specific content or a specific value, wherein the first behavior comprises at least one of following:
enabling packet loss processing for a Packet Data Unit (PDU) set;
enabling packet loss processing for PDU set importance (PSI);
enabling processing for the congestion;
using a specific packet loss timer or timer duration;
determining an important or unimportant PDU set;
determining a judgment threshold or criterion for the important or unimportant PDU set;
deactivating a delay status reporting (DRS) reporting function, or a DSR mechanism;
stopping a DSR reporting or triggering function, or not reporting DSR information; or
deconfiguring DSR triggering or reporting.

113. An information triggering apparatus comprising:
a receiving module, configured to receive the first information sent by a base station, wherein the first information is used to indicate whether User Equipment (UE) triggers a Conditional Handover (CHO) evaluation or execution or evaluates other CHO condition, or the first information is used to indicate whether a network saves energy or enters an energy saving state or uses an energy saving technology or when the network device saves energy.

114. A User Equipment (UE), comprising a memory, a processor and a transceiver, wherein the memory is configured to store a computer program, and the processor is configured to execute the computer program for controlling the transceiver, and execute the computer program to implement operations of the method of any one of claims 1 to 110.

115. A computer-readable storage medium having stored thereon a computer program, wherein the computer program, when executed by a processor, implements operations of the method of any one of claims 1 to 110.

116. A computer program product comprising a computer program that when executed by a processor, implements operations of the method of any one of claims 1 to 110.
